# EUROPÄISCHE PATENTSCHRIFT

(11) **EP 3 415 703 B1**
(45) Veröffentlichungstag und Bekanntmachung des Hinweises auf die Patenterteilung: **01.04.2020**
(21) Anmeldenummer: 18183051.4
(22) Anmeldetag: 06.07.2015
(51) Int. Cl.: E04H 12/22, A47G 33/12, A45B 25/00

(54) **STANDFUSS**
SUPPORTING FOOT
PIED SUPPORT

(30) Priorität: 08.07.2014 DE 102014213203
(43) Veröffentlichungstag der Anmeldung: 19.12.2018
(62) Teilanmeldung aus: 15734662.8
(73) Patentinhaber: Pozybill, Martin, 70599 Stuttgart (DE)
(72) Erfinder: Pozybill, Martin, 70599 Stuttgart (DE)
(74) Vertreter: DREISS Patentanwälte PartG mbB

(56) Entgegenhaltungen:
- EP-A1- 0 822 305
- WO-A2-2005/065279
- DE-U1- 29 604 992

## Beschreibung

Die Erfindung betrifft einen Standfuß mit einer Halteeinrichtung zum Halten eines aufzustellenden Gegenstands, mit einem Aufnahmebereich zur Aufnahme eines abnehmbaren Ballastgewichts in einer Aufnahmeposition. Derartige Standfüße werden beispielsweise beim Aufstellen von Sonnenschirmen oder auch Weihnachtsbäumen eingesetzt. Ein mit dem Standfuß verwendbares Ballastgewicht dient dabei der Stabilisierung des Standfußes und erhöht dessen Kippmoment. Mit Kippmoment ist dabei das Drehmoment gemeint, das aufgebracht werden muss, um den Standfuß mit dem aufzustellenden Gegenstand umzukippen.

DE 296 04 992 U1 beschreibt einen Schirm mit plattenförmigen Ballastgewichten. WO 2005/065279 A2 beschreibt einen Standfuß für einen Schirm, bei dem in Säcken angeordnete Ballastelemente verwendbar sind. EP 0 822 305 A1 beschreibt einen Sonnenschirmfuß mit einer zum Füllen mit einem Ballaststoffmaterial geeigneten Hülle und einem für die Aufnahme des unteren Endes eines Mastes geeigneten Hohlrohr.

Das der Erfindung zugrunde liegende Problem wird durch einen Standfuß nach Anspruch 1 gelöst. Vorteilhafte Weiterbildungen sind in den Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die vorliegende Erfindung ermöglicht es, einen Standfuß zu schaffen, welcher möglichst flexibel für verschiedene aufzustellende Gegenstände verwendbar ist. Der erfindungsgemäße Standfuß soll überdies möglichst komfortabel zu transportieren sein.

Vorzugsweise ist die Aufnahmeposition für das Ballastgewicht radial außenliegend angeordnet und von der Aufnahmeposition aus radial innenliegend ist in Umfangsrichtung wenigstens abschnittsweise ein erhabener Bereich angeordnet. Der erhabene Bereich dient dabei als Mittel zur Vorgabe der Aufnahmeposition des abnehmbaren Ballastgewichts. Die Bezeichnungen "radial außenliegend", "radial innenliegend" und "Umfangsrichtung" sind nicht einschränkend bezüglich der Form des Standfußes zu verstehen. Zwar kann der Standfuß kreisförmig ausgebildet sein, im Sinne der Erfindung sind jedoch ebenso bspw. eine ovale Form oder Formen, die im Wesentlichen einem Vieleck entsprechen.

Eine in radialer Richtung möglichst weit außenliegende Anordnung der Aufnahmeposition wirkt sich vorteilhaft auf das Kippmoment bzw. die Stabilität des Standfußes aus. Durch den erhabenen Bereich, welcher beispielsweise in Form einer umlaufenden Wulst ausgebildet sein kann, wird das mit dem Standfuß verwendete Ballastgewicht in der Aufnahmeposition gegen Verrutschen gesichert. Der erhabene Bereich kann auch durch eine Anschlagsfläche oder in einer bevorzugten Ausführungsform durch eine geneigte Fläche gebildet sein.

Besonders vorteilhaft ist es dabei, wenn der erhabene Bereich eine Transportfläche umfasst, welche vorzugsweise an den Aufnahmebereich angrenzt. Unter einer Transportfläche ist dabei eine Fläche bzw. Oberfläche zu verstehen, über welche ein im Aufnahmebereich aufzunehmendes Ballastgewicht transportiert werden kann. Dies ermöglicht die Beaufschlagung des Standfußes mit einem Ballastgewicht, ohne dass das Ballastgewicht direkt in die Aufnahmeposition eingesetzt werden müsste. Das Ballastgewicht kann an einer geeigneten Stelle des Standfußes auf die Transportfläche aufgebracht werden und gelangt dann über die Transportfläche in die Aufnahmeposition im Aufnahmebereich.

Es hat sich als besonders vorteilhaft erwiesen, wenn die Transportfläche gegenüber einer Standseite insgesamt in einem Winkel zwischen 5° und 30°, vorzugsweise zwischen 10° und 22°, insbesondere zwischen 12° und 18°, geneigt ist. Eine solche Neigung ermöglicht bei geeigneten Ballastgewichten eine wenigstens schwerkraftgestützte, vorzugsweise schwerkraftbasierte, Bewegung des Ballastgewichts.

Eine vorteilhafte Weiterbildung des erfindungsgemäßen Standfußes kennzeichnet sich dadurch, dass die Transportfläche im Wesentlichen die Form einer Mantelfläche eines Kegelstumpfs aufweist. Dies stellt eine einfach herzustellende und zuverlässige und effektiv wirkende Ausführungsform der Transportfläche dar.

In einer vorteilhaften Ausführungsform des erfindungsgemäßen Standfußes umfasst diese einen Zuführbereich, in welchen das Ballastgewicht einführbar ist, und welcher derart ausgebildet ist, dass sich das Ballastgewicht nach dem Einführen schwerkraftgetrieben über die Transportfläche in die Aufnahmeposition bewegt, sich vorzugsweise rollend und/oder gleitend in die Aufnahmeposition bewegt. Hierdurch wird ermöglicht, das Ballastgewicht bequem und einfach in den Aufnahmebereich über den Zuführbereich einzuführen. Vom Zuführbereich aus bewegt sich das Ballastgewicht dann aufgrund seines Gewichts über die Transportfläche in die Aufnahmeposition im Aufnahmebereich.

Besonders vorteilhaft ist dabei, wenn zwischen der Halteeinrichtung und dem Zuführbereich eine Einführeinrichtung angeordnet ist, welche eine Einführfläche aufweist, die im Wesentlichen die Form einer Mantelfläche eines Kegelstumpfs aufweist und gegenüber der Standseite insgesamt in einem Winkel zwischen 7° und 35°, vorzugsweise zwischen 12° und 25°, insbesondere zwischen 15° und 20°, geneigt ist. Mit der besagten Einführeinrichtung lässt sich das Ballastgewicht besonders einfach und bequem in den Standfuß einführen. Über den Zuführbereich und die Transportfläche gelangt das Ballastgewicht dann in die vorgesehene Aufnahmeposition im Aufnahmebereich.

Als vorteilhaft hat sich überdies erwiesen, wenn der Standfuß im Wesentlichen rotationssymmetrisch, vorzugsweise rotationssymmetrisch zu der Halteeinrichtung ist.

Im Sinne der Erfindung ist überdies, wenn die Halteeinrichtung zur Aufnahme von Halteeinsätzen ausgeführt ist. Durch die Halteeinsätze lässt sich der erfindungsgemäße Standfuß in vorteilhafter Weise an verschiedene aufzustellende Gegenstände adaptieren. Beispielsweise kann ein Halteeinsatz in Form einer Hülse mit einem zur Oberseite des Standfußes hin geöffneten im Wesentlichen zylinderförmigen Aufnahmeraum ausgebildet sein, wobei die Hülse mindestens einen Gewindebolzen aufweist, der in den Aufnahmeraum einschraubbar ist. Ein Halteeinsatz kann auch durch ein Element mit Krallen zum Eingreifen in einen Stamm ausgebildet sein. Die beiden eben beschriebenen Halteeinsätze können bspw. zum Aufstellen eines Weihnachtsbaums dienen. Ein weiterer Halteeinsatz kann zur Aufnahme eines Sonnenschirms ausgebildet sein, wobei verschiedene Halteeinsätze für verschiedene Sonnenschirme denkbar sind. Von Vorteil ist auch, wenn ein Halteeinsatz durch ein Adapterelement (bzw. Adaptervorrichtung), insbesondere ein hohlzylinderförmiges Adapterelement, ausgebildet ist, das ausgebildet ist, um den aufzustellenden Gegenstand zu halten. Der aufzustellende Gegenstand kann also in das Adapterelement (bzw. in die Adaptervorrichtung) eingeschoben werden und das Adapterelement in die Halteeinrichtung eingesetzt werden.

Eine vorteilhafte Weiterbildung des erfindungsgemäßen Standfußes kennzeichnet sich dadurch, dass auf der Standseite mindestens eine Noppe angeordnet ist, wobei die Noppe vorzugsweise eine zylinderförmige Ausnehmung, zur Aufnahme eines Nivellierelements aufweist. Unter einem Nivellierelement ist dabei ein Element zu verstehen, welches in wenigstens zwei unterschiedlich weit versenkten Stellungen in der Noppe befestigbar ist. Durch die Noppe entsteht beim Aufstellen des Standfußes ein Abstand zwischen einer Oberfläche, auf welcher der Standfuß steht, und einer Unterseite des Standfußes, so dass eine Luftzirkulation ermöglicht und einer Schimmelbildung vorgebeugt wird. Das Nivellierelement kann beispielsweise stiftförmig ausgebildet sein und variabel tief in die Noppe eingeführt werden. Hierdurch können Unebenheiten in der Oberfläche, auf welcher der Standfuß steht, ausgeglichen werden. Vorzugsweise weist der Standfuß mehrere Noppen auf, welche auf der Standseite verteilt angeordnet sind, insbesondere mehrere Noppen mit Nivellierelementen.

Eine vorteilhafte Weiterbildung des erfindungsgemäßen Standfußes kennzeichnet sich dadurch, dass auf der Standseite mindestens ein kompressibles Gleitelement bzw. Auflagerelement angeordnet ist, wobei das Auflagerelement derart ausgebildet ist, dass es in einem expandierten oder unkomprimierten Zustand mindestens 3 mm, vorzugsweise mindestens 5 mm, insbesondere mindestens 7 mm über einen standseitigen Umriss des Standfußes hinausragt und in einem komprimierten Zustand bündig mit dem standseitigen Umriss des Standfußes verläuft. Der komprimierte Zustand ist dabei der Zustand, welchen das Auflagerelement einnimmt, wenn ein Ballastgewicht in der Aufnahmeposition im Standfuß aufgenommen ist. Der expandierte oder unkomprimierte Zustand ist der Zustand, welchen das Auflagerelement einnimmt, wenn kein Ballastgewicht im Standfuß aufgenommen ist, wenn also lediglich das Gewicht des Standfußes auf das Auflagerelement wirkt. Der standseitige Umriss des Standfußes ist dabei der Umriss des Standfußes beim Blick auf den Standfuß orthogonal zur Standseite wobei hierbei eventuell vorhandene Noppen und/oder Nivellierelemente ein Teil des Standfußes sind.

In einer bevorzugten Ausführungsform des Standfußes ist das Auflagerelement ringförmig ausgebildet und in einer auf der Standseite des Standfußes ausgebildeten Ausnehmung angeordnet. Alternativ hierzu hat sich als vorteilhaft erwiesen, wenn mehrere Auflagerelemente in Form von zylindrischen Stiften auf der Unterseite des Standfußes angeordnet sind.

Vorteilhafterweise ist das Auflagerelement bzw. sind die Auflagerelemente unter Verwendung eines polymerischen Materials hergestellt. Von Vorteil ist überdies, wenn das Auflagerelement bzw. die Auflagerelemente auf ihren standseitigen Oberflächen, das heißt, auf den Oberflächen, welche dem Untergrund, auf welchem der Standfuß steht, zugewandt sind, eine gleitfähigkeitsfördernde Beschichtung aufweisen, vorzugsweise eine keramikbasierte Beschichtung, welche vorteilhafterweise aufgedampft ist.

Der Werkstoff des Auflagerelements bzw. der Auflagerelemente ist dabei vorteilhafterweise so gewählt, dass das Auflagerelement bzw. die Auflagerelemente komprimiert werden, wenn sich ein Ballastgewicht in der Aufnahmeposition befindet, wobei das Auflagerelement bzw. die Auflagerelemente im komprimierten Zustand bündig mit dem standseitigen Umriss des Standfußes verläuft bzw. verlaufen. In anderen Worten: Das Gewicht des Ballastgewichts komprimiert das Auflagerelement bzw. die Auflagerelemente derart, dass der Standfuß auf bspw. den an der Standseite angeordneten Noppen aufsitzt.

Erfindungsgemäß ist auch ein Ballastgewicht, zum Beschweren eines der oben genannten Standfüße, welches sich dadurch kennzeichnet, dass es eine Vielzahl flexibel miteinander verbundener oder verbindbarer Einzelgewichte bzw. Ballastelemente, vorzugsweise eine Vielzahl im Wesentlichen kugelförmiger, zylinderförmiger oder fassförmiger, flexibel miteinander verbundener Ballastelemente umfasst. Die Ballastelemente der eben beschriebenen Ausführungsform des Ballastgewichts bilden also eine Art Kette, wodurch das Ballastgewicht einfach zu transportieren ist und sich in vorteilhafter Weise in die Aufnahmeposition einbringen lässt. Die beschriebene Form des Ballastgewichts ermöglicht bei Verwendung mit dem oben beschriebenen Standfuß ein einfaches Einbringen des Ballastgewichts mittels der Einführeinrichtung in den Zuführbereich, sowie einen einfachen Transport des Ballastgewichts über die Transportfläche des Standfußes.

Als besonders vorteilhaft hat sich dabei herausgestellt, dass wenigstens zwei der Ballastelemente über ein Verbindungsmittel miteinander verbunden sind, wobei die wenigstens zwei Ballastelemente jeweils ein Durchgangsloch aufweisen und ein längliches, insbesondere seilartiges Verbindungsmittel durch das jeweilige Durchgangsloch der Ballastelemente geführt ist.

Weitere Aspekte beziehen sich auf ein Ballastgewicht, welches einen metallischen Werkstoff umfasst, vorzugsweise eine Vielzahl flexibel miteinander verbundener Ballastelemente umfasst, wobei mindestens ein Ballastelement, vorzugsweise alle Ballastelemente, einen metallischen Werkstoff umfasst beziehungsweise umfassen, vorzugsweise aus mindestens einem metallischen Werkstoff besteht beziehungsweise bestehen. Metallische Werkstoffe weisen eine besonders hohe Dichte auf und ermöglichen hierdurch bei geringem Platzbedarf eine hohe Stabilisierung des Standfußes durch das verwendete Ballastgewicht.

Durch die erfindungsgemäße Kombination des Standfußes mit dem dazu passenden Ballastgewicht wird eine stabile Aufstellung eines aufzustellenden Gegenstandes erreicht. Durch die außenliegende Anordnung des Ballastgewichts in der Aufnahmeposition erhält der Standfuß eine hohe Kippstabilität. Beim Transport des erfindungsgemäßen Standfußes kann das Ballastgewicht aus der Aufnahmeposition entnommen werden und der Standfuß und das Ballastgewicht können separat voneinander transportiert werden. Hierdurch können auch Personen den Standfuß in einfacher und komfortabler Weise transportieren, die körperlich nicht dazu in der Lage wären, den Standfuß und das Ballastgewicht gleichzeitig zu tragen.

Im Sinne der Erfindung ist überdies ein Standfuß mit Ballastgewicht wie oben beschrieben, wobei das Ballastgewicht in der Aufnahmeposition derart angeordnet ist, dass sich beim Blick auf eine Standseite wenigstens 80%, vorzugsweise 90%, insbesondere 100%, der Masse des Ballastgewichts außerhalb eines inneren Kreises befinden, und dass ein Kreismittelpunkt des inneren Kreises ein geometrischer Mittelpunkt der Halteeinrichtung ist, und ein Durchmesser des inneren Kreises mindestens 50%, vorzugsweise 60%, insbesondere 65%, eines Durchmessers eines äußeren Kreises beträgt, und der äußere Kreis der kleinstmögliche Kreis ist, welcher beim Blick auf die Standseite den Standfuß komplett umgibt. Durch die eben beschriebene Anordnung der Aufnahmeposition wird eine hohe Stabilität des Standfußes erreicht. Diese resultiert aus dem hohen Kippmoment, welches aufgrund des in vorteilhafter Weise angeordneten Ballastgewichts durch den Standfuß aufgenommen werden kann. Da das komplette Ballastgewicht weit von der Halteeinrichtung entfernt ist, wird das stabilisierende Gewicht des Ballastgewichts effizient genutzt. Hierdurch kann bei hoher Kippstabilität ein Ballastgewicht mit geringem Gewicht verwendet werden.

Vorteilhafter Weise wird der Standfuß unter Verwendung eines polymerischen Materials, vorzugsweise aus einem polymerischen Material, hergestellt. Dies ermöglicht eine kostengünstige Herstellung im Spritzgussverfahren.

Im Sinne der Erfindung ist ebenso, wenn der Standfuß ein Oberelement und ein Unterelement umfasst, und wenn das Oberelement und das Unterelement unter Verwendung eines Dichtmittels beispielsweise eines Dichtrings miteinander verbindbar sind, vorzugsweise verbunden sind, wobei die Verbindung lösbar oder unlösbar ausgebildet sein kann. Der Aufnahmebereich ist dann beispielsweise wasserdicht ausgeführt, so dass der Standfuß mit einem festen Ballastgewicht aber auch mit einem fließfähigen Ballastmittel, vorzugsweise Wasser und/oder Sand, befüllt werden kann.

In einer Ausgestaltung ist vorgesehen, dass der Standfuß mindestens ein primäres Auflagerelement umfasst, das einen elastisch verformbaren ersten Teilkörper aufweist und wenigstens einen ein Keramikmaterial umfassenden zweiten Teilkörper, der an dem ersten Teilkörper angeordnet ist.

Weiterhin kann vorgesehen sein, dass der Standfuß mindestens ein sekundäres Auflagerelement umfasst, wobei, insbesondere in einem unbelasteten Zustand, das primäre Auflagerelement sich weiter aus einer Grundflächenebene des Standfußes hinaus erstreckt als das sekundäre Auflagerelement.

Vorzugsweise ist das primäre Auflagerelement an einem Grundkörper, beispielsweise einem Gehäuse, des Standfußes angeordnet. Dabei ist der erste Teilkörper dem Grundkörper zugewandt (sozusagen "nach oben"), und der zweite Teilkörper ist einer Trägerfläche zugewandt (sozusagen "nach unten"). Insbesondere kann der elastisch verformbare erste Teilkörper den zweiten Teilkörper gegen die Trägerfläche (federnd) drücken. In beiden genannten Ausgestaltungen ist der erste Teilkörper also vergleichsweise weich, federnd, nachgiebig, ausgeführt, und der zweite Teilkörper ist also vergleichsweise hart, fest, starr, glatt, ausgeführt.

Beispielsweise umfasst der Standfuß eine Mehrzahl von primären Auflagerelementen, beispielsweise fünf Stück. Durch die Elastizität des ersten Teilkörpers können die einzelnen primären Auflagerelemente im Wesentlichen unabhängig voneinander gegen die Trägerfläche drücken. Dadurch kann vorteilhaft eine gesamte Auflagerkraft des Standfußes vergleichsweise gleichmäßig auf die einzelnen primären Auflagerelemente verteilt und somit auch eventuelle Unebenheiten der Trägerfläche ausgeglichen werden. In einer weiteren Ausgestaltung umfasst der Standfuß ein im Wesentlichen als Hohlzylinder ausgeführtes Tragrohr, welches konzentrisch zu einer Längsachse des Standfußes an dem Standfuß angeordnet ist. Dadurch können die Möglichkeiten des erfindungsgemäßen Standfußes erweitert werden. Insbesondere kann das Tragrohr stabiler ausgeführt sein, als ein Halterohr beispielsweise eines Sonnenschirms.

Weiterhin kann vorgesehen sein, dass das Tragrohr mittels mindestens einer zumindest in etwa als Hohlzylinder ausgeführten Adaptervorrichtung an dem Standfuß gehalten ist. Dadurch kann beispielsweise auch ein Tragrohr mit einem abweichenden Durchmesser an dem Standfuß angeordnet sein.

Vorzugsweise ist das Tragrohr formschlüssig an dem Standfuß gehalten, wobei das Tragrohr und/oder die mindestens eine Adaptervorrichtung mittels mindestens einer Schraubverbindung an dem Standfuß gehalten ist. Dadurch kann das Tragrohr besonders einfach montiert bzw. demontiert werden.

In einer weiteren Ausgestaltung weist der Standfuß eine zur Anordnung auf einer Trägerfläche vorgesehene Standfläche und eine der Standfläche im wesentlichen gegenüberliegende Aufnahmefläche auf, wobei im Bereich der Aufnahmefläche eine wenigstens eine Nut aufweisende Aufnahmevorrichtung zur Aufnahme eines Hohlzylinders angeordnet ist. Mittels der Nut ist es möglich, den Hohlzylinder auf einfache Weise stabil an dem Standfuß anzuordnen. Vorzugsweise ist der Hohlzylinder als biegbare und/oder knickbare Platte ausgeführt. Weiterhin kann vorgesehen sein, dass der Standfuß einen Hohlzylinder umfasst, welcher in der Aufnahmevorrichtung aufgenommen ist, wobei der Standfuß eine Tischplatte umfasst, welche an einem von dem Standfuß abgewandten Endabschnitt des Hohlzylinders angeordnet ist. Der Hohlzylinder ist vorzugsweise konzentrisch zu einer Längsachse des Standfußes an diesem angeordnet. Somit wird es beispielsweise ermöglicht, dass die Tischplatte von dem Hohlzylinder gehalten ist.

In einer weiteren Ausgestaltung umfasst die Halteeinrichtung mindestens eine Adaptervorrichtung zum Halten des aufzustellenden Gegenstands, wobei die Adaptervorrichtung mindestens eine radial wirkende Klemmvorrichtung aufweist, und wobei ein radiales Maß der Klemmvorrichtung im Wesentlichen stufenlos einstellbar ist. Dadurch kann der aufzustellende Gegenstand einen spezifischen Außendurchmesser aufweisen und dennoch stabil in dem Standfuß gehalten sein.

Weiterhin kann vorgesehen sein, dass die Klemmvorrichtung mindestens ein erstes Klemmelement umfasst, welches, insbesondere im Wesentlichen starr, mit dem Standfuß koppelbar ist, wobei die Klemmvorrichtung mindestens ein zweites Klemmelement umfasst, welches radial zwischen dem ersten Klemmelement und dem aufzustellenden Gegenstand anordenbar ist, wobei das erste Klemmelement eine erste Kontaktfläche aufweist und das zweite Klemmelement eine zweite Kontaktfläche aufweist, wobei sich die erste und zweite Kontaktfläche zumindest abschnittsweise berühren, wobei insbesondere eine Berührfläche eine Fläche von wenigstens etwa 20 Quadratmillimeter aufweist. Dadurch kann die Klemmvorrichtung besonders kostengünstig hergestellt werden und ist außerdem besonders variabel verwendbar.

In einer Ausgestaltung kann vorgesehen sein, dass wenigstens eine Oberfläche wenigstens eines Klemmelements, vorzugsweise eine Oberfläche des zweiten Klemmelements, insbesondere eine der ersten bzw. der zweiten Kontaktfläche gegenüberliegende Oberfläche, zumindest abschnittsweise eine Geometrie einer Klothoide aufweist.

In einer weiteren Ausgestaltung ist in der Halteeinrichtung des Standfußes ein Halteeinsatz angeordnet.

In einer weiteren Ausgestaltung ist der Halteeinsatz als hohlzylinderförmiges Adapterelement ausgeführt.

In einer weiteren Ausgestaltung weist der Halteeinsatz eine Auflagefläche auf.

Weitere vorteilhafte Ausführungsformen sind Gegenstand der Unteransprüche.

Nachfolgend werden beispielhafte Ausführungsformen der Erfindung unter Bezugnahme auf die Zeichnung erläutert. In der Zeichnung zeigen:
- Figur 1: eine Draufsicht auf einen erfindungsgemäßen Standfuß;
- Figur 2: eine Schnittdarstellung des Standfußes aus Figur 1 entsprechend der Linie II-II;
- Figur 3: eine perspektivische Darstellung des Standfußes aus Figur 1;
- Figur 4: eine perspektivische Darstellung des Standfußes aus Figur 1 in zerlegtem Zustand;
- Figur 5: eine schematische Seitenansicht eines erfindungsgemäßen Ballastgewichts für den Standfuß;
- Figur 6: eine perspektivische Darstellung eines Einzelgewichts bzw. Ballastelements des Ballastgewichts aus Figur 5;
- Figur 7: eine Anordnung des erfindungsgemäßen Standfußes mit einem weiteren im Wesentlichen identischen weiteren Standfuß;
- Figur 8: einen erfindungsgemäßen Standfuß mit einem in einer Aufnahmeposition aufgenommenen Ballastgewicht;
- Figur 9: eine Draufsicht auf den Standfuß, in welcher die Position des Ballastgewichts näher erläutert ist;
- Figur 10: eine Anordnung, ähnlich Figur 7, wobei die Standfüße Adapterelemente umfassen;
- Figur 11: einen Standfuß, der mittels Nivellierelementen auf einer geneigten Fläche aufgestellt ist;
- Figur 12: eine teilweise Schnittdarstellung einer Ausführungsform eines Standfußes mit einem Hohlzylinder und einer Tischplatte;
- Figur 13: eine vergrößerte Darstellung eines in der Figur 12 unteren Bereichs des Standfußes;
- Figur 14: eine Platte, mittels welcher der Hohlzylinder von Figur 12 gebildet werden kann;
- Figur 15: einen Ausschnitt XV aus der Figur 14 mit einer ersten Aussparung der Platte;
- Figur 16: einen Ausschnitt XVI aus der Figur 14 mit einer zweiten Aussparung der Platte;
- Figur 17: eine Ausführungsform eines Standfußes und eines aufzustellenden Gegenstands in einem ersten Zustand;
- Figur 18: den Standfuß von Figur 17 in einem zweiten Zustand;
- Figur 19: eine Skizze für eine Anordnung eines Tragrohrs, einer ersten Adaptervorrichtung und einer zweiten Adaptervorrichtung des Standfußes;
- Figur 20A: eine erste axiale Schnittansicht gemäß einer Linie B-B von Figur 20D einer dritten Adaptervorrichtung zum Halten des aufzustellenden Gegenstands;
- Figur 20B: eine zweite axiale Schnittansicht der dritten Adaptervorrichtung gemäß einer Linie C-C von Figur 20D;
- Figur 20C: eine erste radiale Ansicht ("Rückansicht") der dritten Adaptervorrichtung;
- Figur 20D: eine zweite radiale Schnittansicht ("Vorderansicht") der dritten Adaptervorrichtung;
- Figur 20E: eine dritte axiale Schnittansicht der dritten Adaptervorrichtung gemäß einer Linie D-D von Figur 20C;
- Figur 20F: eine weitere Ansicht ("Untersicht") der dritten Adaptervorrichtung;
- Figur 20G: eine nochmals weitere Ansicht ("Hilfsansicht") der dritten Adaptervorrichtung;
- Figur 21A: eine perspektivische Darstellung eines Klemmelements für die dritte Adaptervorrichtung;
- Figur 21B: eine Skizze mit einem ersten und einem zweiten Klemmelement für die dritte Adaptervorrichtung; und
- Figur 21C: eine Perspektivdarstellung der dritten Adaptervorrichtung mit zwei Klemmvorrichtungen.

Es werden für funktionsäquivalente Elemente und Größen in allen Figuren auch bei unterschiedlichen Ausführungsformen die gleichen Bezugszeichen verwendet.

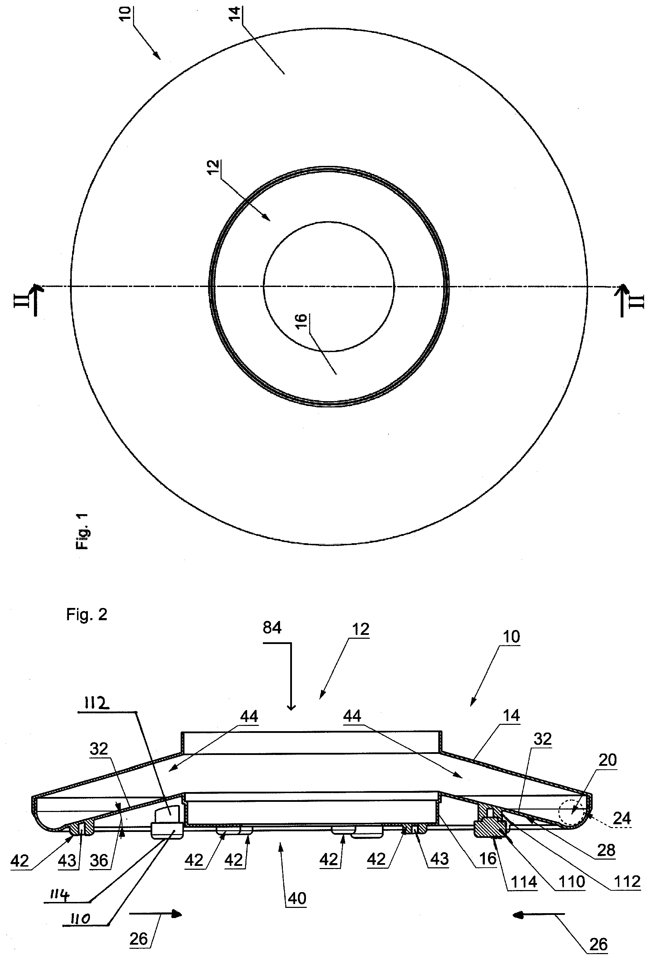

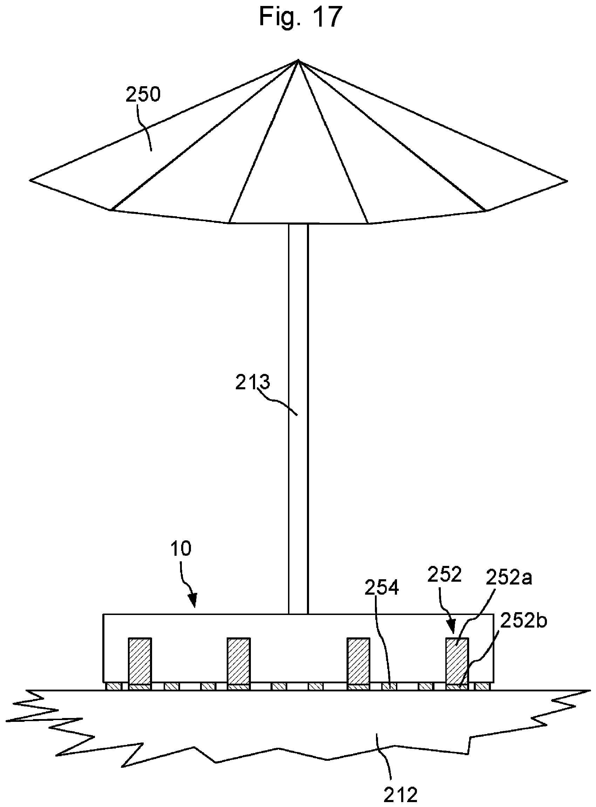

Ein erfindungsgemäßer Standfuß 10, dargestellt in Figur 1, umfasst eine Halteeinrichtung 12 zur Aufnahme eines aufzustellenden Gegenstands 250 (siehe Figur 17). In der in Figur 1 gezeigten Draufsicht ist überwiegend ein Oberelement 14 sichtbar. Ein Unterelement 16 ist lediglich im Bereich der Halteeinrichtung 12 sichtbar.

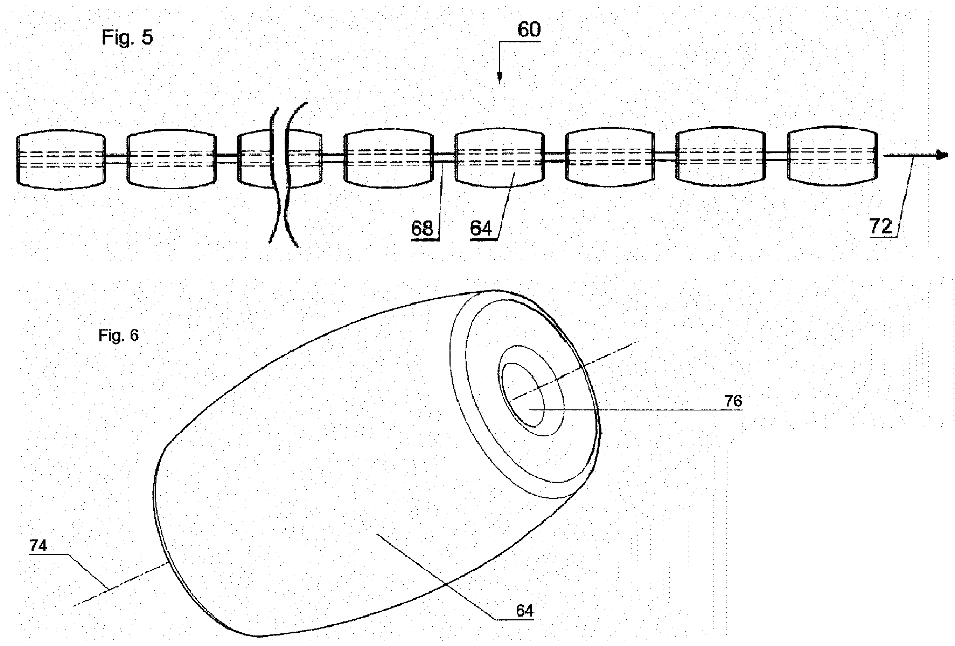

Eine Schnittdarstellung des Standfußes 10 entlang der Linie II-II ist in Figur 2 dargestellt. In einem Aufnahmebereich 20 ist eine Aufnahmeposition 24 eines hier nicht dargestellten Ballastgewichts 60 (siehe beispielsweise die Figur 5) durch eine unterbrochene Linie schematisch dargestellt. Ist das Ballastgewicht 60 im Aufnahmebereich 20 aufgenommen, so befindet es sich in der Aufnahmeposition 24. Von der Aufnahmeposition 24 aus gesehen ist eine nach radial innen liegend weisende Richtung durch Pfeile 26 gekennzeichnet. Von der Aufnahmeposition 24 radial innenliegend ist ein erhabener Bereich 28 angeordnet.

Figur 2 zeigt also den Standfuß 10 mit einem Aufnahmebereich 20 zur Aufnahme des abnehmbaren Ballastgewichts 60 in der Aufnahmeposition 24, wobei die Aufnahmeposition 24 radial außenliegend angeordnet ist und von der Aufnahmeposition 24 aus radial innenliegend, in Umfangsrichtung wenigstens abschnittsweise der erhabene Bereich 28 angeordnet ist.

Der erhabene Bereich 28 umfasst eine Transportfläche 32, welche an den Aufnahmebereich 20 angrenzt. Die Transportfläche 32 weist dabei im Wesentlichen die Form einer Mantelfläche eines Kegelstumpfes auf. Die Transportfläche 32 ist in einem Winkel 36 von etwa 17° gegenüber einer Standseite 40 des Standfußes 10 geneigt.

In Abhängigkeit von einer jeweiligen Ausführungsform des Standfußes 10 kann die Transportfläche 32 gegenüber der Standseite 40 insgesamt in einem Winkel 36 zwischen 5° und 30°, vorzugsweise zwischen 10° und 22°, insbesondere zwischen 12° und 18°, geneigt sein.

Das Oberelement 14 und das Unterelement 16 sind lösbar oder unlösbar miteinander verbunden, wobei das Oberelement 14 den Aufnahmebereich 20 in Richtung einer Oberseite 84 hin begrenzt und das Unterelement 16 den Aufnahmebereich 20 in Richtung einer Standseite 40 hin begrenzt.

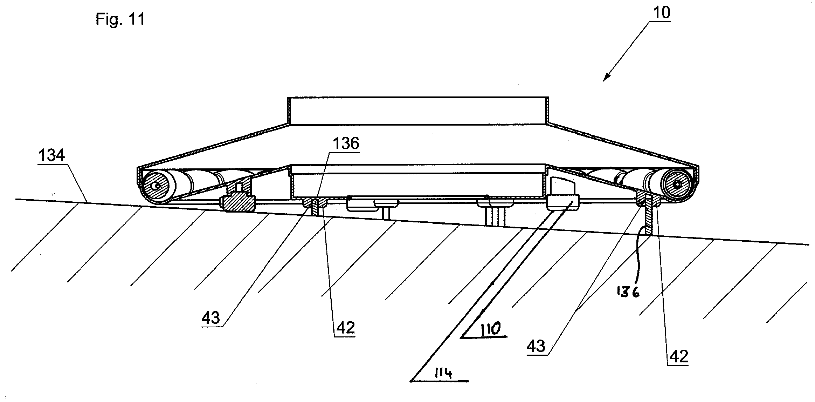

Auf der Standseite 40 des Standfußes 10 sind Noppen 42 angeordnet, welche jeweils eine zylinderförmige Ausnehmung 43, zur Aufnahme eines in Figur 2 nicht gezeigten Nivellierelements 136 aufweisen. Auf besagte Nivellierelemente 136 wird weiter unten bei der Figur 11 noch näher eingegangen werden. Von dem erhabenen Bereich 28 bzw. der Transportfläche 32 aus gesehen radial innen liegend umfasst der Standfuß 10 einen Zuführbereich 44.

Der Standfuß 10 weist auf seiner Standseite 40 Gleitelemente bzw. Auflagerelemente 110 auf. Die einzelnen Auflagerelemente 110 sind jeweils in einer Aufnahmehülse 112 aufgenommen und dadurch am Standfuß 10 befestigt. Die Auflagerelemente 110 sind aus einem polymerischen Werkstoff hergestellt. Der polymerische Werkstoff ist dabei derart gewählt, dass die einzelnen Auflagerelemente 110 dann, wenn kein Ballastgewicht 60 im Standfuß 10 aufgenommen ist, sich in einem expandierten Zustand befinden. Dieser expandierte Zustand ist in Figur 2 gezeigt. Im expandierten Zustand ragen die Auflagerelemente 110 über die äußeren Umrisse des Standfußes 10 hinaus. In anderen Worten, der Standfuß 10 steht auf den Auflagerelementen 110, wenn kein Ballastgewicht 60 im Standfuß aufgenommen ist.

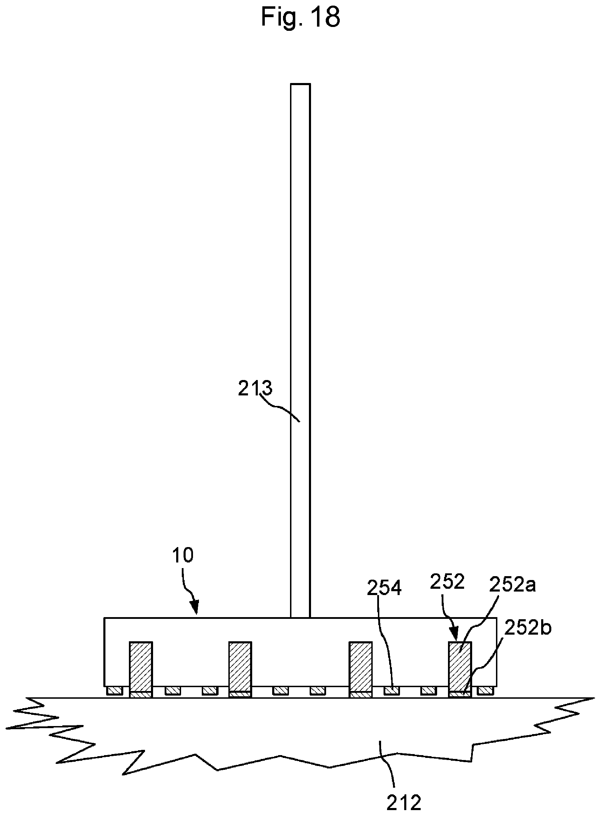

Weiter unten wird eine Ausführungsform für das Auflagerelement 110 beschrieben, wobei das Auflagerelement 110 besonders differenziert ausgeführt ist und dort als primäres Auflagerelement 252 bezeichnet wird. Siehe dazu auch die Figuren 17 und 18.

Ist hingegen ein Ballastgewicht 60 im Standfuß 10 aufgenommen, so werden die Auflagerelemente 110 durch das Gewicht des Ballastgewichts 60 komprimiert. In diesem komprimierten Zustand schließen die Auflagerelemente 110 bündig mit dem Außenumriss des Standfußes 10 ab. In anderen Worten, die Auflagerelemente 110 ragen nicht über die Außenumrisse des Standfußes 10 hinaus. Der Standfuß 10 steht also auf den Noppen 42 beziehungsweise, falls Nivellierelemente 136 in den zylinderförmigen Ausnehmungen 43 der Noppen 42 angeordnet sind auf den Nivellierelementen 136.

Eine standseitige Fläche 114 der Auflagerelemente 110 ist mit einer gleitfähigkeitsfördernden Beschichtung versehen. Diese Beschichtung umfasst eine aufgedampfte Keramikschicht. Diese Keramikschicht ist widerstandsfähig gegen Verschleiß durch Materialabtrag und gleichzeitig gleitfähig, das heißt sie weist einen geringen Haft- und Gleitreibungskoeffizienten auf.

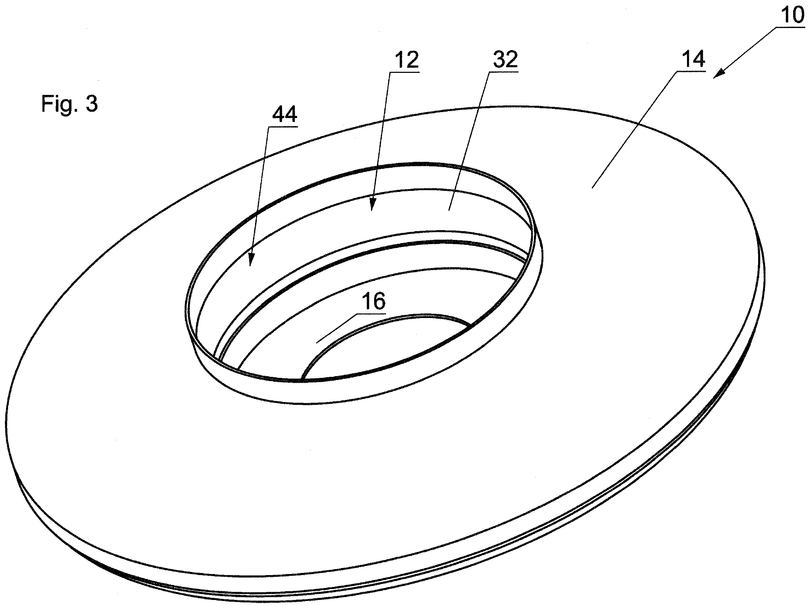

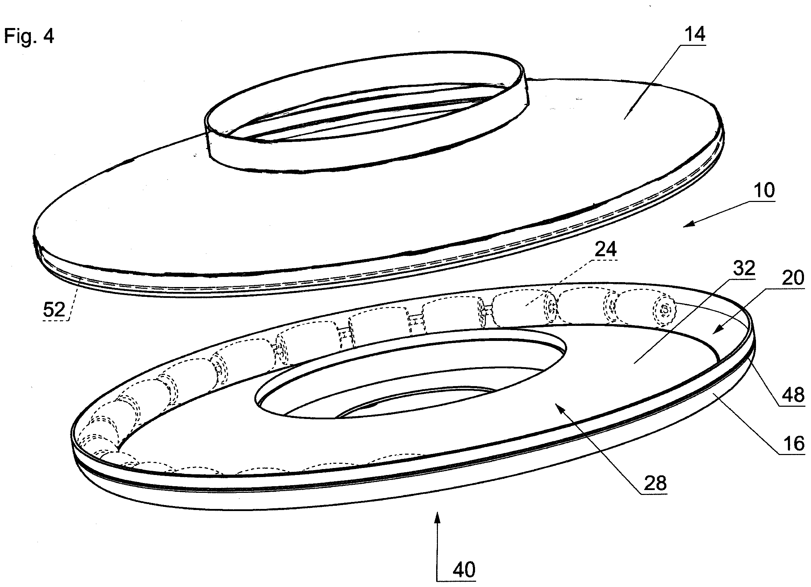

In Figur 4 ist der Standfuß 10 perspektivisch in einem zerlegten Zustand dargestellt, das bedeutet, das Oberelement 14 und das Unterelement 16 sind voneinander getrennt. In den vorhergehenden Figuren 1-3 sind das Oberelement 14 und das Unterelement 16 in miteinander verbundenem Zustand dargestellt.

Im vorliegenden Beispiel sind das Oberelement 14 und das Unterelement 16 über eine am Unterelement 16 angeordnete umlaufende Nut 48 und einen an einer Innenseite des Oberelements 14 angeordneten umlaufenden Vorsprung 52, welcher in Figur 4 lediglich schematisch durch eine unterbrochene Linie angedeutet ist, miteinander verbindbar. Im verbundenen Zustand greift der umlaufende Vorsprung 52 in die umlaufende Nut 48 ein, wodurch das Oberelement 14 und das Unterelement 16 kraftschlüssig und formschlüssig miteinander verbunden sind.

Figur 5 zeigt ein Ballastgewicht 60 zum Beschweren des in den vorhergehenden Figuren dargestellten Standfußes 10. Das Ballastgewicht 60 umfasst mehrere Einzelgewichte bzw. Ballastelemente 64, von denen lediglich eines in Figur 5 ein Bezugszeichen trägt. Die Ballastelemente 64 sind durch ein längliches, im vorliegenden Fall seilartig ausgebildetes Verbindungsmittel 68 miteinander verbunden. Mit seilartig ist hierbei eine Struktur des Verbindungsmittels 68 gemeint, welche eine Flexibilität oder Verformbarkeit des Verbindungsmittels 68 orthogonal zu seiner Erstreckung in dessen Längsrichtung, welche durch den Pfeil mit dem Bezugszeichen 72 gekennzeichnet ist, erlaubt. Das Verbindungsmittel 68 kann überdies auch in der Längsrichtung verformbar sein. Dies ist jedoch im Sinne des Begriffs seilartig nicht zwingend. So dass also ein in Längsrichtung starres, orthogonal zur Längsrichtung jedoch flexibles Verbindungsmittel 68 auch unter den Begriff seilartig fällt.

Vorzugsweise umfasst das Ballastgewicht 60 eine Vielzahl flexibel miteinander verbundener oder verbindbarer Ballastelemente 64, vorzugsweise eine Vielzahl im Wesentlichen kugelförmiger, zylinderförmiger oder fassförmiger, flexibel miteinander verbundener Ballastelemente 64. Alternativ können auch beliebige sonstige rollfähige Ausführungsformen für die Ballastelemente 64 verwendet werden. Ein Ballastelement 64 des Ballastgewichts 60 ist in Figur 6 in vergrößerter perspektivischer Darstellung gezeigt. Das Ballastelement 64 ist im vorliegenden Fall fassförmig ausgeführt.

Das Ballastgewicht 60 weist entlang einer gedachten Längsachse 74 ein Durchgangsloch 76 auf. Das Durchgangsloch 76 dient der Aufnahme des Verbindungsmittels 68, so dass mehrere Ballastelemente 64 sozusagen auf das Verbindungsmittel 68 aufgefädelt werden können, um ein Ballastgewicht 60 zu bilden. Vorzugsweise weist das Verbindungsmittel 68 dabei lokale Umfangserweiterungen auf, welche die Ballastelemente 64 zueinander beabstanden.

Die Ballastelemente 64 des Ballastgewichts 60 in Figur 5 und damit auch das Ballastelement 64 in Figur 6 bestehen aus einem metallischen Werkstoff. Im Sinne der Erfindung ist aber auch, wenn das Ballastgewicht 60 einen metallischen Werkstoff umfasst, vorzugweise, wenn das Ballastgewicht 60 eine Vielzahl flexibel miteinander verbundener Ballastelemente 64 umfasst und mindestens ein Ballastelement 64, vorzugsweise alle Ballastelemente 64, einen metallischen Werkstoff umfasst bzw. umfassen.

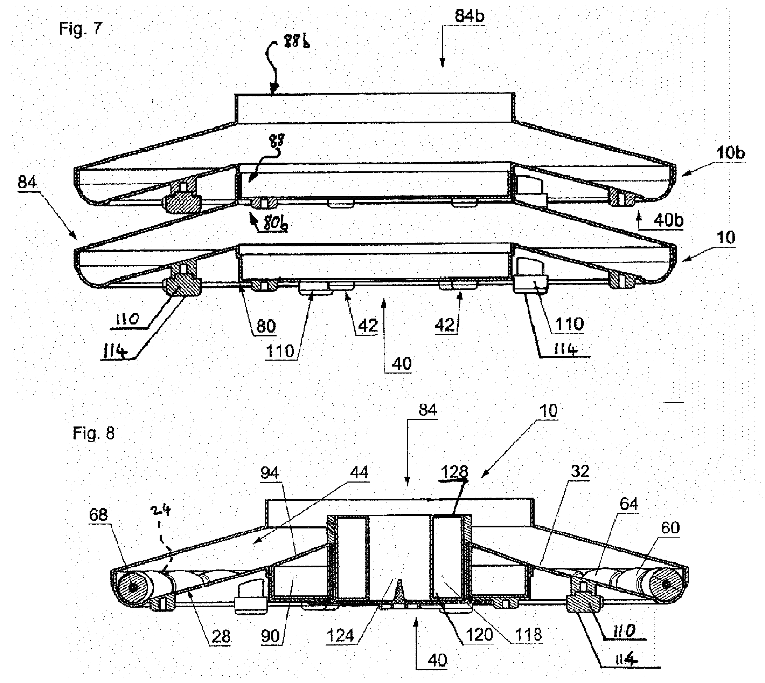

Figur 7 zeigt den Standfuß 10 aus den Figuren 1 bis 4 sowie einen identischen Standfuß 10b, welcher mit dem Standfuß 10 verbunden ist. Die den Elementen des Standfußes 10 entsprechenden Elemente des Standfußes 10b tragen entsprechende Bezugszeichen mit dem Index b.

Die Verbindung zwischen dem Standfuß 10 und dem identisch ausgebildeten Standfuß 10b ist über einen an der Standseite 40b ausgebildeten hervortretenden Bereich 80b und einen an einer der Standseite 40 gegenüberliegenden Oberseite 84 ausgebildeten zurückgesetzten Bereich 88 realisiert. Die zurückgesetzten Bereiche 88, 88b sind komplementär zu den hervortretenden Bereichen 80, 80b ausgebildet. Komplementär bedeutet dabei, dass der hervortretende Bereich 80, 80b des einen Standfußes 10 oder 10b in den zurückgesetzten Bereich 88, 88b des anderen Standfußes 10b oder 10 einsetzbar ist, bevorzugt formschlüssig und/oder kraftschlüssig einsetzbar ist.

Figur 8 zeigt den Standfuß 10 mit dem Ballastgewicht 60, wobei das Ballastgewicht 60 in der Aufnahmeposition 24 im Aufnahmebereich 20 aufgenommen ist. Das Ballastgewicht 60 wird dabei über den erhabenen Bereich 28 in der Aufnahmeposition 24 gehalten.

Das Ballastgewicht 60 kann mittels einer Einführeinrichtung 90 in den Zuführbereich 44 eingebracht werden. Die Einführeinrichtung 90 weist dabei eine Einführfläche 94 auf, auf welche das Ballastgewicht 60 aufgelegt werden kann. Im Anschluss an das Auflegen auf die Einführfläche 94 bewegt sich das Ballastgewicht 60 schwerkraftgetrieben über die Transportfläche 32 und dadurch in die Aufnahmeposition 24. Aufgrund der Schwerkraft rollt das Ballastgewicht 60 also sozusagen mit seinen fassförmigen Ballastelementen 64 über die Einführfläche 94 und die Transportfläche 32 in die Aufnahmeposition 24.

Vorzugsweise weist die Einführfläche im Wesentlichen die Form einer Mantelfläche eines Kegelstumpfs auf und ist gegenüber der Standseite 40 insgesamt in einem Winkel zwischen 7° und 35°, vorzugsweise zwischen 12° und 25°, insbesondere zwischen 15° und 20°, geneigt.

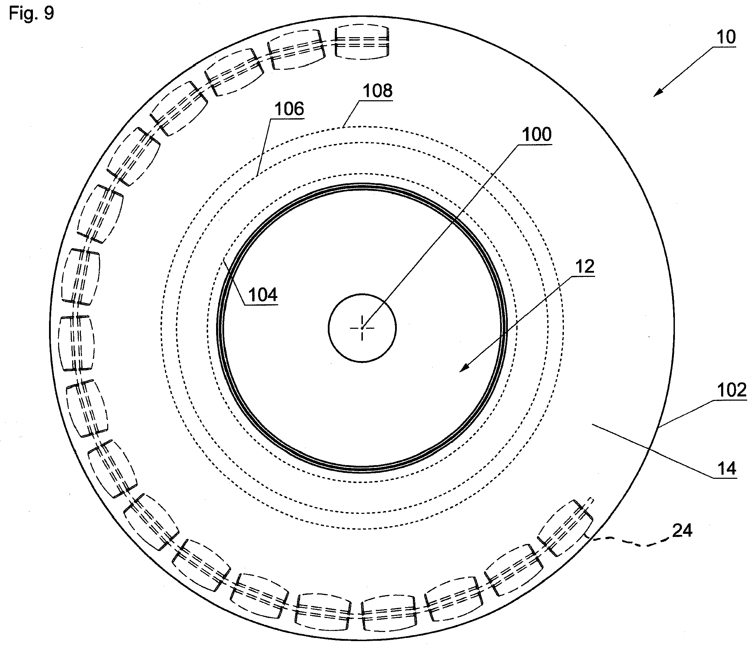

Figur 9 zeigt eine Darstellung des Standfußes 10 entsprechend Figur 1. In Figur 9 ist zusätzlich ein geometrischer Mittelpunkt 100 der Halteeinrichtung 12 dargestellt. Ein äußerer Kreis 102 ist der kleinstmögliche Kreis, welcher den Standfuß 10 beim Blick auf die Standseite 40 komplett umgibt. Aufgrund der rotationssymmetrischen Ausbildung des Standfußes 10 fällt der äußere Kreis 102 im vorliegenden Beispiel mit dem Außenumriss des Standfußes 10 zusammen. Bei andersartig geformten Ausführungsformen des erfindungsgemäßen Standfußes 10 ist dies jedoch nicht zwingend der Fall.

Ein erster innerer Kreis 104 hat einen Durchmesser, welcher 50% des Durchmessers des äußeren Kreises entspricht. Ein zweiter innerer Kreis 106 hat einen Durchmesser, welcher 60% des Durchmessers des äußeren Kreises 102 entspricht und ein dritter innerer Kreis 108 hat einen Durchmesser, welcher 65% des Durchmessers des äußeren Kreises 102 entspricht. Die Aufnahmeposition 24 für ein Ballastgewicht 60 liegt dabei derart, dass das komplette Ballastgewicht 60, und damit im vorliegenden Ausführungsbeispiel auch 100% seiner Masse, außerhalb der drei inneren Kreise 104, 106 und 108 liegt. Der Mittelpunkt der inneren Kreise 104, 106 und 108 entspricht dem Mittelpunkt 100 der Halteeinrichtung 12.

Aufgrund der rotationssymmetrischen Ausbildung des Standfußes 10 fällt auch der Mittelpunkt des äußeren Kreises 102 auf den Mittelpunkt 100 der Halteeinrichtung 12. Bei andersartig geformten Ausführungsformen des erfindungsgemäßen Standfußes 10 ist ein Zusammenfallen des Mittelpunkts 100 der Halteeinrichtung 12 und des Mittelpunkts des äußeren Kreises 102 jedoch nicht zwingend der Fall.

Vorzugsweise ist das Ballastgewicht 60 in der Aufnahmeposition 24 derart angeordnet, dass sich beim Blick auf eine Standseite 40 wenigstens 80%, vorzugsweise 90%, insbesondere 100%, der Masse des Ballastgewichts 60 außerhalb eines inneren Kreises 104, 106, 108 befinden, und dass ein Kreismittelpunkt des inneren Kreises 104, 106, 108 ein geometrischer Mittelpunkt 100 der Halteeinrichtung 12 ist, und dass ein Durchmesser des inneren Kreises 104, 106, 108 mindestens 50%, vorzugsweise 60%, insbesondere 65%, eines Durchmessers eines äußeren Kreises 102 beträgt, und dass der äußere Kreis der kleinstmögliche Kreis 102 ist, welcher beim Blick auf die Standseite 40 den Standfuß 10 komplett umgibt.

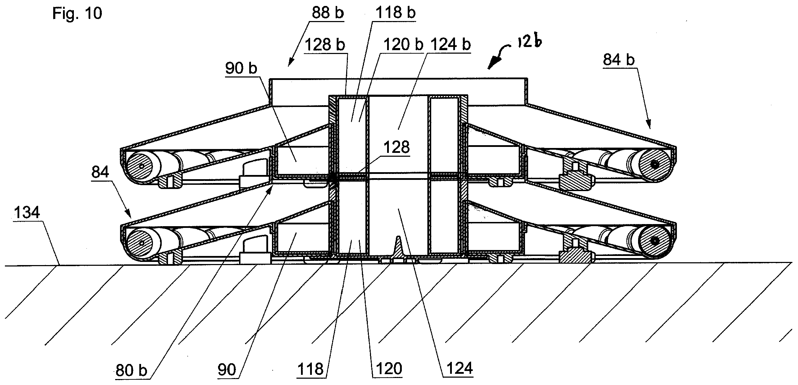

Figur 10 zeigt einen Standfuß 10 und einen identischen Standfuß 10b, welcher mit dem Standfuß 10 verbunden ist. In den jeweiligen Halteeinrichtungen 12, 12b der Standfüße 10, 10b sind Halteeinsätze 118, 118b aufgenommen. Die Halteeinsätze 118, 118b sind in Figur 10 als hohlzylinderförmige Adapterelemente 120, 120b ausgeführt. In den inneren Hohlraum 124, 124b kann jeweils ein aufzustellender Gegenstand 250 eingesetzt beziehungsweise eingeschoben werden. Dieses Einschieben erfolgt vorzugsweise kraftschlüssig. Der aufzustellende Gegenstand 250 kann hierdurch in vorteilhafter Weise in dem erfindungsgemäßen Standfuß 10 fixiert werden. Die Halteeinsätze 118, 118b weisen jeweils eine Auflagefläche 128, 128b auf. Die Auflagefläche 128 steht in der in Figur 10 gezeigten Konfiguration mit dem hervortretenden Bereich 80b des zweiten im Wesentlichen identischen Standfußes 10b in Kontakt. Die Auflagefläche 128 ist ausgebildet um, aufgrund des Gewichts des im Wesentlichen identischen zweiten Standfußes 10b wirkende Kräfte auf die Standseite 40 des Standfußes 10 zu leiten. Die Kräfte wirken dann auf den Untergrund, auf welchem der Standfuß 10 aufsitzt.

Die Ausführung der Halteeinsätze 118, 118b als Adapterelemente 120, 120b ist lediglich beispielhaft zu verstehen. Eine alternative Ausführungsform ist in Form einer Hülse denkbar, welche mit einem zur Oberseite des Standfußes 10 beziehungsweise 10b hin geöffneten im Wesentlichen zylinderförmigen Aufnahmeraum ausgebildet sein kann, wobei die Hülse mindestens einen Gewindebolzen aufweist, der in den Aufnahmeraum einschraubbar ist. Hierdurch kann beispielsweise ein aufzustellender Weihnachtsbaum durch Einschrauben des Gewindebolzens in der Hülse fixiert werden und damit im Standfuß 10 aufgestellt werden.

Figur 11 zeigt einen Standfuß 10, welcher auf einer geneigten Fläche 134 aufgestellt ist. Um die Neigung der Fläche 134 auszugleichen, sind Nivellierelemente 136 in den zylinderförmigen Ausnehmungen 43 der Noppen 42 angeordnet. Je nach Position der Noppen 42 ragen die Nivellierelemente 136 unterschiedlich weit aus den Noppen 42 heraus. Hierdurch kann die Neigung der Fläche 134 ausgeglichen werden.

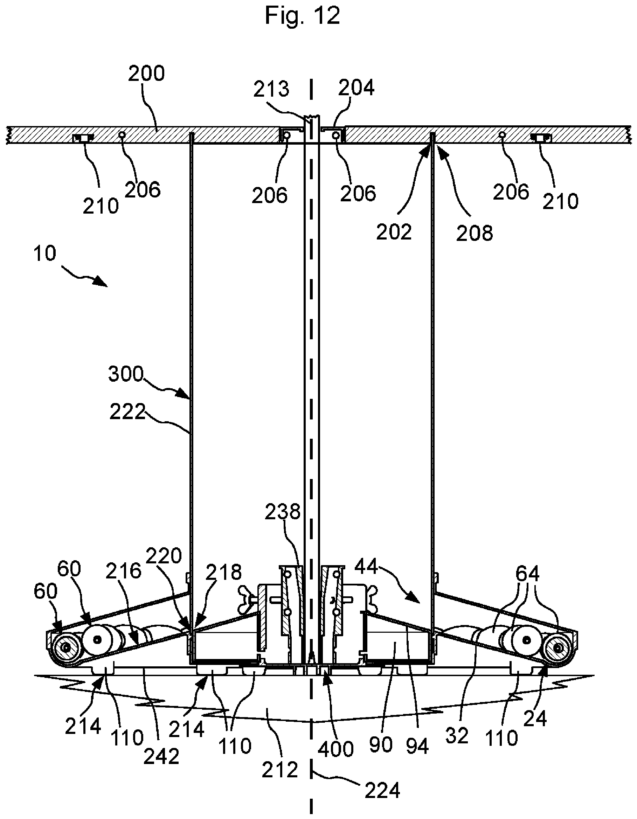

Figur 12 zeigt einen Standfuß 10 zum Halten mindestens eines aufzustellenden Gegenstands 250 (vorliegend eine Tischplatte 200 sowie ein Halterohr 213 für einen Sonnenschirm 250), wobei der Standfuß 10 eine zur Anordnung auf einer Trägerfläche 212 vorgesehene Standfläche 214 und eine der Standfläche 214 im wesentlichen gegenüberliegende Aufnahmefläche 216 aufweist, wobei im Bereich der Aufnahmefläche 216 eine wenigstens eine Nut 218 aufweisende Aufnahmevorrichtung 220 zur Aufnahme eines Hohlzylinders 222 angeordnet ist. Die Zeichnung zeigt den Standfuß 10 in einer teilweisen Schnittdarstellung.

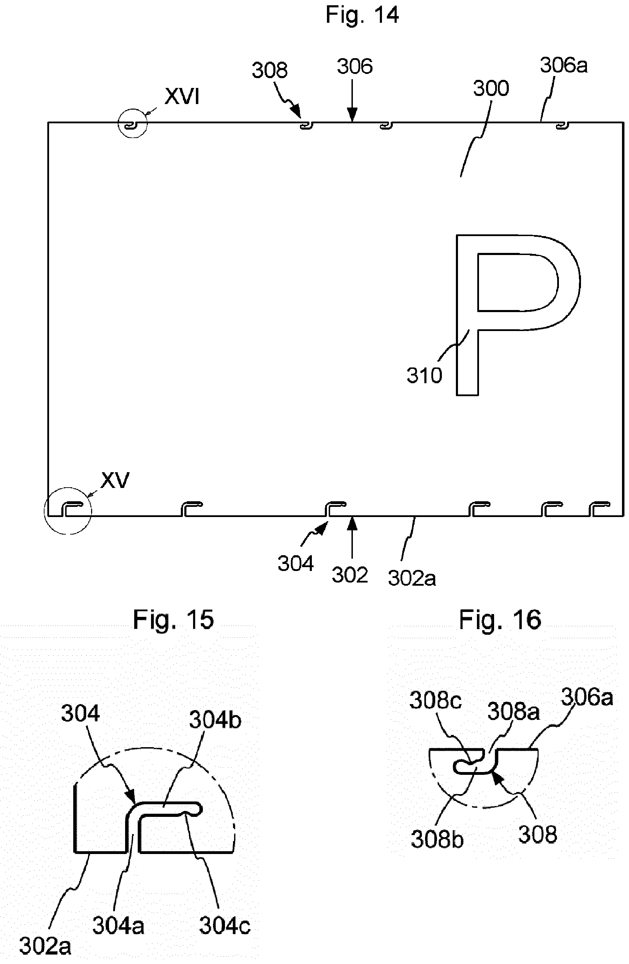

Der Standfuß 10 umfasst vorliegend in einem unteren Bereich von Figur 12 einen auf der Trägerfläche 212 aufliegenden Tischfuß (ohne Bezugszeichen), sowie in einem mittleren Bereich von Figur 12 eine zu dem Hohlzylinder 222 gebogene Platte 300 (siehe Figur 14), sowie in einem oberen Bereich von Figur 12 die Tischplatte 200. Die Tischplatte 200 ist in der Figur 12 nur angedeutet.

In weiteren Ausführungsformen umfasst der Standfuß 10 gegebenenfalls nur den auf der Trägerfläche 212 aufliegenden Tischfuß oder nur den Tischfuß zusammen mit dem Hohlzylinder 222.

Vorliegend ist der Standfuß 10 im Wesentlichen rotationssymmetrisch zu einer Längsachse 224 (welche konzentrisch zu dem Halterohr 213 verläuft) ausgeführt. In weiteren Ausführungsformen des Standfußes 10 ist der Tischfuß und/oder der Hohlzylinder 222 und/oder die Tischplatte 200 elliptisch, rechteckförmig, oder quadratisch ausgeführt.

In dem Tischfuß umfasst der Standfuß 10 vorliegend zwei Ballastgewichte 60, welche in der radial äußeren umlaufenden Aufnahmeposition 24 des Standfußes 10 aufgenommen sind. Die Ballastgewichte 60 umfassen jeweils eine Mehrzahl von in etwa fassförmig ausgebildeten Ballastelementen 64, welche mittels des (in der Zeichnung nicht sichtbaren) Verbindungsmittels 68 miteinander verbunden sind. Das Verbindungsmittel 68 ist beispielsweise ein Seil, eine Schnur oder eine Kette. Die Ballastgewichte 60 sind über eine als Kegelstumpf ausgeführte Transportfläche 32 des Standfußes 10 in der Aufnahmeposition 24 gehalten.

Das Ballastgewicht 60 kann mittels einer (im Wesentlichen rotationssymmetrisch ausgeführten) Einführeinrichtung 90 in einen Zuführbereich 44 eingebracht werden. Dies erfolgt, bevor der Hohlzylinder 222 in der Nut 218 montiert wird. Die Einführeinrichtung 90 weist dabei eine Einführfläche 94 auf, auf welche das Ballastgewicht 60 aufgelegt werden kann. Im Anschluss an das Auflegen auf die Einführfläche 94 bewegt sich das Ballastgewicht 60 schwerkraftgetrieben über die Transportfläche 32 und dadurch in die Aufnahmeposition 24. Aufgrund der Schwerkraft rollt das Ballastgewicht 60 also sozusagen mit seinen fassförmigen Ballastelementen 64 über die Einführfläche 94 und die Transportfläche 32 in die Aufnahmeposition 24.

Weiterhin umfasst der Standfuß 10 eine zentrisch angeordnete Halteeinrichtung 238, in welcher vorliegend mittels Flügelschrauben (ohne Bezugszeichen) das Halterohr 213 für einen (nicht dargestellten) Sonnenschirm 250 angeordnet ist. Die Halteeinrichtung 238 ist ihrerseits in einer Adaptervorrichtung 400 gehalten, welche zentrisch zu der Längsachse 224 in dem Standfuß 10 angeordnet ist.

An einem in der Figur 12 unteren Gehäuseabschnitt 242 weist der Standfuß 10 eine Mehrzahl von Auflagerelementen 110 ("Noppen") auf, mittels welchen der Standfuß 10 auf der Trägerfläche 212 aufliegt. Untere Flächen der Auflagerelemente 110 charakterisieren zusammen die Standfläche 214 des Standfußes 10.

In einer Ausführungsform ist die Nut 218, insbesondere in einer Ebene parallel zu der Standfläche 214, zumindest abschnittsweise elliptisch ausgeführt. In der Figur 12 ist die Nut 218, in einer Ebene parallel zu der Standfläche 214 zumindest abschnittsweise kreisförmig ausgeführt. Vorliegend ist der Hohlzylinder 222 also ein Kreiszylinder.

In einer nicht dargestellten Ausführungsform ist die Nut 218, insbesondere in einer Ebene parallel zu der Standfläche 214, zumindest abschnittsweise polygonal ausgeführt.

In einer nicht dargestellten weiteren Ausführungsform ist die Nut 218, insbesondere in einer Ebene parallel zu der Standfläche 214, zumindest abschnittsweise als Kurve, z.B. allgemeine Kurve, ausgeführt, und kann damit u.a. auch eine wesentlich komplexere Geometrie als elliptische bzw. polygonale Nuten aufweisen. Beispielsweise weist die Nut zumindest abschnittsweise Parabelform oder Hyperbelform oder dergleichen auf.

In der Figur 12 weist die Nut 218, insbesondere in einer Ebene parallel zu der Standfläche 214, einen geschlossenen Verlauf auf. Entsprechend ist die Nut 218 radial umlaufend um die Längsachse 224 des Standfußes 10 ausgeführt.

Verallgemeinernd kann die derart radial umlaufende Nut 218 auch als Innenraum eines durch die Aufnahmevorrichtung 220 gebildeten Zylinders verstanden werden, wobei im Extremfall eine radial innere "Begrenzungswand" der Nut 218 einen verschwindend kleinen Radius annimmt. Dieser Fall ist beispielsweise gegeben, wenn in Figur 12 die Einführeinrichtung 90 entfernt wird. Insbesondere dann, wenn der Hohlzylinder 222 ein vergleichsweise dickes Material aufweist, kann der Hohlzylinder 222 dennoch mit brauchbarer Stabilität in der Aufnahmevorrichtung 220 angeordnet sein.

In einer nicht dargestellten Ausführungsform weist die Nut 218, insbesondere in einer Ebene parallel zu der Standfläche 214, einen offenen Verlauf auf. Beispielsweise ist die Nut 218 ähnlich wie in Figur 12 radial umlaufend um die Längsachse 224 des Standfußes 10 ausgeführt, wobei die Nut 218 jedoch einmal oder mehrmals unterbrochen ist, beispielsweise um Material zu sparen. Beispielsweise kann die Nut auch "C"-Form aufweisen.

Es versteht sich, dass in einer radialen Schnittebene (wie in Figur 12 gezeigt) der Nut 218 diese stets nach oben hin "offen" ausgeführt ist, um den Hohlzylinder 222 aufnehmen zu können.

In einer nicht dargestellten Ausführungsform des Standfußes 10 ist die Aufnahmefläche 216 zumindest abschnittsweise im Wesentlichen eben ausgeführt, insbesondere im Wesentlichen parallel zu der Standfläche 214 ausgeführt.

In einer weiteren Ausführungsform ist die Aufnahmefläche 216 zumindest abschnittsweise geneigt ausgeführt, insbesondere in einer in Bezug auf die Längsachse 224 des Standfußes 10 radialen Richtung geneigt ausgeführt.

In der Ausführungsform von Figur 12 weist die Aufnahmefläche 216 die Form einer Mantelfläche eines Kegelstumpfs auf. Dabei weist ein Winkel des Kegelstumpfs in Bezug auf die Standfläche 214 einen Wert in einem Bereich von 10° bis 80°, bevorzugt in einem Bereich von 10° bis 50°, noch stärker bevorzugt in einem Bereich von 12° bis 20° auf. In der Figur 12 beträgt der Winkel in etwa 16°.

Wie bereits beschrieben, ist der Hohlzylinder 222 in der Aufnahmevorrichtung 220 aufgenommen. Insbesondere ist der Hohlzylinder 222 in der Nut 218 der Aufnahmevorrichtung 220 lösbar aufgenommen. Entsprechend weist der Hohlzylinder 222 in einer Ebene parallel zu der Standfläche 214 einen kreisförmigen Querschnitt auf.

In weiteren Ausführungsformen des Standfußes 10 weist der Hohlzylinder 222 in einer Ebene parallel zu der Standfläche 214 einen zumindest abschnittsweise elliptisch bzw. kreisförmig bzw. polygonal bzw. kurvig ausgeführten Querschnitt auf.

In einer weiteren Ausführungsform ist der Hohlzylinder 222 im Wesentlichen einstückig ausgeführt. Vorliegend umfasst der Hohlzylinder 222 eine biegbare und/oder knickbare Platte 300 (siehe Figur 14), wobei die Platte 300 dazu ausgebildet ist, zu der Form des Hohlzylinders 222 gebogen und/oder geknickt zu werden. Von besonderem Vorteil ist es, dass die biegbare und/oder knickbare Platte 300 gut transportiert werden kann. Beispielsweise können beim Transport eine Mehrzahl von Platten 300 flach aufeinander gelegt werden, wobei sich ein minimales Volumen ergibt.

In einer Ausführungsform ist der Hohlzylinder 222 in einer Ebene parallel zu der Standfläche 214 umlaufend stoffschlüssig ausgeführt. Beispielsweise sind dabei gegenüber liegende Randabschnitte der Platte 300 mittels Schweißen oder Kleben zu einer geschlossen Form verbunden.

In einer alternativen Ausführungsform weist der Hohlzylinder 222 in einer Ebene parallel zu der Standfläche 214 eine Überlappung oder eine Stoßstelle mit sich selbst auf. Vorzugsweise sind dabei Mittel vorhanden, um zwei Randabschnitte des Hohlzylinders 222 an der Überlappung bzw. an der Stoßstelle miteinander zu verbinden.

Wie weiter aus der Figur 12 zu erkennen, umfasst der Standfuß 10 den Hohlzylinder 222, welcher in der Aufnahmevorrichtung 220 aufgenommen ist, insbesondere in der Nut 218 der Aufnahmevorrichtung 220 aufgenommen ist. Dabei umfasst der Standfuß 10 vorliegend die Tischplatte 200, welche an einem von dem Standfuß 10 abgewandten Endabschnitt des Hohlzylinders 222 angeordnet ist. In ähnlicher (jedoch nicht zwingend in gleicher) Weise, wie der Hohlzylinder 222 an dem Tischfuß (in der Figur 12 unten) des Standfußes 10 aufgenommen ist, kann auch der Hohlzylinder 222 mit der Tischplatte 200 verbunden sein.

Wie weiter zu erkennen, weist die Tischplatte 200 vorliegend eine radial umlaufende Nut 202 zur Aufnahme des Endabschnitts des Hohlzylinders 222 auf. Außerdem umfasst die Tischplatte 200 bzw. ein zentrisch in der Tischplatte 200 angeordnetes ringförmiges Element 204 eine im Wesentlichen zentrische Öffnung (ohne Bezugszeichen), welche dazu ausgebildet ist, ein Halterohr 213, insbesondere das Halterohr 213 für einen Schirmständer, radial außen zu umgeben und/oder radial außen zu halten.

Weiterhin sind in der Figur 12 Bohrungen 206 in der Tischplatte 200 gezeigt, welche es ermöglichen, zwei zumindest in etwa hälftige Teil-Tischplatten miteinander zu verbinden. Dazu sind ergänzend auch Rastmittel 210 an der Tischplatte 200 vorhanden.

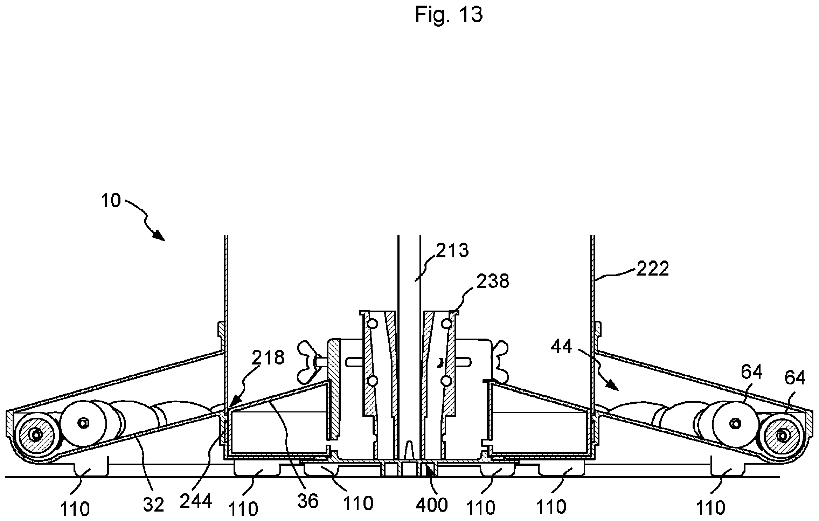

Die Figur 13 zeigt den ersten Abschnitt des Standfußes 10 von Figur 12 in einer vergrößerten Darstellung. An einem dem Standfuß 10 zugewandten Endabschnitt weist der Hohlzylinder 222 mindestens einen Teil eines Bajonettverschlusses 244 auf, welcher dazu ausgebildet ist, den Hohlzylinder 222 mit dem Standfuß 10 zu verbinden. Der besagte Endabschnitt ist dabei im Wesentlichen von der Nut 218 umschlossen.

In einer ersten Variante dazu ist der mindestens eine Teil des Bajonettverschlusses 244 mittels mindestens einer Aussparung 304 in dem Hohlzylinder 222 ausgeführt (siehe Figur 14). In einer zweiten Variante ist der mindestens eine Teil des Bajonettverschlusses 244 mittels mindestens einer stiftartigen Ausprägung an dem Hohlzylinder 222 ausgeführt. Dabei umfasst die Aufnahmevorrichtung 220 jeweils einen entsprechend komplementären Teil des Bajonettverschlusses 244.

In ähnlicher Weise können auch die Tischplatte 200 und der Hohlzylinder 222 mittels mindestens eines Bajonettverschlusses 208 (Figur 12) miteinander verbunden sein. Dazu weist der Endabschnitt des Hohlzylinders 222 mindestens eine Aussparung 308 (vorzugsweise eine Mehrzahl von Aussparungen 308) für einen ersten Teil des Bajonettverschlusses 208 auf, wobei die Tischplatte 200 mindestens einen Bolzen 240 für einen zweiten Teil des Bajonettverschlusses 208 aufweist. Die Figur 14 zeigt zusammen mit den Figuren 15 und 16 eine Platte 300, welche biegbar und/oder knickbar ist, und welche im Wesentlichen in der Form eines Polygons, vorliegend eines Rechtecks, ausgeführt ist. Wie zu erkennen, weist die Platte 300 an einer ersten Seite 302 (in der Figur 14 unten) vorliegend sechs nach der ersten Seite 302 hin offene Aussparungen 304 auf, wobei, ausgehend von einem Rand 302a der ersten Seite 302, die Aussparung 304 einen ersten Abschnitt 304a umfasst, welcher sich zumindest in etwa rechtwinklig zu dem Rand 302a erstreckt, und wobei, ausgehend von dem ersten Abschnitt 304a, die Aussparung 304 einen zweiten Abschnitt 304b umfasst, welcher sich zumindest in etwa parallel zu dem Rand 302a erstreckt.

Beispielsweise weist der erste Abschnitt 304a einen Winkel von in etwa 70° bis 110°, vorzugsweise von in etwa 80° bis in etwa 100°, in Bezug auf den Rand 302a auf. Vorliegend beträgt dieser Winkel in etwa 90°. Beispielsweise weist der zweite Abschnitt 304b einen Winkel von in etwa +10° bis in etwa -10°, vorzugsweise von in etwa +4° bis in etwa -4°, in Bezug auf den Rand 302a auf. Vorliegend beträgt dieser Winkel in etwa 0°. Dabei weisen der erste und der zweite Abschnitt 304a und 304b jeweils zumindest in etwa eine konstante Breite (ohne Bezugszeichen) auf.

Weiterhin ist in der Figur 15 zu erkennen, dass die Aussparung 304 zumindest in etwa eine L-Form aufweist, wobei der erste und der zweite Abschnitt 304a und 304b jeweils einem Schenkel der L-Form entsprechen. Außerdem weist der zweite Abschnitt 304b eine lokale Verengung 304c der Breite auf. Dabei ist die lokale Verengung 304c der Breite des zweiten Abschnitts 304b, ausgehend von dem ersten Abschnitt 304a, weiter als etwa 60% einer Länge des zweiten Abschnitts 304b von dem ersten Abschnitt 304a entfernt. Die Aussparung 304 ist als Teil des Bajonettverschlusses 244 ausgebildet.

Weiterhin ist in der Figur 14 zu erkennen, dass die Platte 300 an mindestens einer zweiten Seite 306 (in Figur 14 oben) mindestens eine nach der zweiten Seite 306 hin offene Aussparung 308 aufweist, wobei die zweite Seite 306 vorzugsweise der ersten Seite 302 gegenüber liegt. Dabei weisen die vorliegend vier Aussparungen 308 an der zweiten Seite 306 eine zumindest in etwa zu der mindestens einen Aussparung 304 der ersten Seite 302 vergleichbare Form auf. Die Aussparungen 308 weisen entsprechend jeweils einen ersten Abschnitt 308a, einen zweiten Abschnitt 308b und eine lokale Verengung 308c auf, siehe Figur 16. Wie in Figur 14 weiter zu erkennen, ist eine Breite des ersten und/oder des zweiten Abschnitts 308a bzw. 308b der zweiten Aussparung 308 kleiner als eine vergleichbare Breite der ersten Aussparung 304.

Vorzugsweise erstrecken jeweilige Schenkel der Aussparungen 304 bzw. 308 der ersten und der zweiten Seite 302 bzw. 306, welche Schenkel dem jeweiligen Rand 302a bzw. 306a abgewandt angeordnet sind, sich gegenläufig zueinander. Dies hat den Vorteil, dass nach einer Montage des Hohlzylinders 222 an dem ersten Abschnitt des Standfußes 10 auch die Tischplatte 200 an dem Hohlzylinder 222 montiert werden kann, wobei beim Einrasten der jeweiligen Bajonettverschlüsse 244 und 208 insbesondere eine gleichsinnige Drehrichtung ermöglicht wird.

Vorzugsweise sind an der ersten und an der zweiten Seite 302 bzw. 306 der Platte 300 jeweils zwei oder mehr Aussparungen 304 bzw. 308 angeordnet, wobei entlang des Randes 302a bzw. 306a mindestens ein Abstand zwischen jeweils zwei Aussparungen 304 auf der einen Seite 302 verschieden ist zu einem Abstand zwischen jeweils zwei vergleichbaren Aussparungen 308 auf der anderen Seite 306. Dies hat den Vorteil, dass bei einem versehentlichen Vertauschen der Seiten 302 und 306 bei der Montage des Hohlzylinders 222 an dem ersten Abschnitt des Standfußes 10 bzw. an der Tischplatte 200, insbesondere die vorliegend kleineren Aussparungen 308 nicht beschädigt werden können.

Vorzugsweise beträgt eine Dicke der Platte 300 kleiner gleich 10 mm, Millimeter, bevorzugt kleiner gleich 5 mm, noch stärker bevorzugt kleiner gleich 2 mm. Beispielsweise umfasst die Platte 300 ein Metall und/oder ein Kunststoffmaterial und/oder ein Pappmaterial. In einer Ausführungsform weist eine äußere Mantelfläche des Hohlzylinders 222 eine geprägte, gedruckte, aufgeklebte und/oder auflackierte textliche und/oder bildliche Information 310 auf. Diese ist beispielhaft durch einen großen Buchstaben "P" dargestellt.

In einer Ausführungsform der Platte 300 beträgt eine Länge des Randes 302a bzw. 306a der ersten bzw. der zweiten Seite 302 bzw. 306 zwischen in etwa 30 cm, Zentimeter und etwa 320 cm, vorzugsweise zwischen in etwa 60 cm und in etwa 160 cm. Beispielsweise beträgt ein Durchmesser des Hohlzylinders 222 oder ein dazu vergleichbares Maß mindestens 20 Prozent, bevorzugt mindestens 40 Prozent von einem Durchmesser des Standfußes 10 (bzw. des besagten Tischfußes) oder einem dazu vergleichbaren Maß.

In einer weiteren (nicht dargestellten) Ausführungsform weist die Platte 300 eine Mehrzahl von Elementen auf, welche in einer Ebene der Platte 300 fortlaufend aneinandergereiht und miteinander verbunden sind. Beispielsweise sind die Elemente als Lamellen ausgeführt, ähnlich wie dies bei Rollläden der Fall ist. Vorzugsweise ist die Verbindung der Elemente biegbar, drehbar und/oder gelenkig ausgeführt. In einer ersten Variante weisen die Elemente definierte Biegestellen auf ("biegbar"), beispielsweise mittels lokaler Verminderungen der Dicke der Platte 300. Dies ist auch als so genanntes "Folienscharnier" bekannt. In einer zweiten Variante weisen die Elemente an einer ersten Längsseite stabförmige "Achsen" und entsprechend an einer zweiten Längsseite ringförmige "Buchsen" auf ("drehbar"). In einer dritten Variante greifen jeweils zwei Elemente hakenförmig ineinander ("gelenkig"), ähnlich, wie dies von Rollläden bekannt ist. Auf diese Weise erhält die Platte 300 selbst dann, wenn die Elemente in sich steif ausgeführt sind, eine "biegbare" und/oder "knickbare" Eigenschaft und kann entsprechend zu dem Hohlzylinder 222 geformt werden.

Die Figur 17 zeigt vereinfacht und teilweise als Schnittdarstellung einen Standfuß 10 zum Halten mindestens eines aufzustellenden Gegenstands 250, wobei der Standfuß 10 mindestens ein primäres Gleitelement bzw. Auflagerelement 252 umfasst, das einen elastisch verformbaren ersten Teilkörper 252a aufweist und wenigstens einen ein Keramikmaterial umfassenden zweiten Teilkörper 252b, der an dem ersten Teilkörper 252a angeordnet ist. In der Figur 17 sind vier primäre Auflagerelemente 252 sichtbar.

Nachfolgend ist der aufzustellende Gegenstand 250 beispielhaft durch einen Sonnenschirm 250 charakterisiert, weshalb der Sonnenschirm 250 ebenfalls mit dem Bezugszeichen 250 gekennzeichnet ist. Die Figur 17 zeigt somit auch einen Schirmständer.

Der Standfuß 10 liegt auf der nur andeutungsweise dargestellten Trägerfläche 212 auf. Die Trägerfläche 212 ist beispielsweise ein Fußboden, ein Teppichboden, eine mit Fliesen, Steinen oder einem asphaltierten Belag bedeckte Fläche, oder ein Erdboden. Dabei liegt der zweite Teilkörper 252b auf der Trägerfläche 212 auf. Dabei ist der erste Teilkörper 252a zumindest mit einem Teil seines Volumens in dem Standfuß 10 und somit in der Zeichnung jeweils oberhalb des zweiten Teilkörpers 252b angeordnet.

Vorliegend umfasst der Sonnenschirm 250 das Halterohr 213, welches mittels einer in Figur 17 nicht sichtbaren Halteeinrichtung 238 (siehe Figuren 12 und 13) in dem Standfuß 10 gehalten ist. Beispielsweise ist das Halterohr 213 als Baueinheit mit dem Sonnenschirm 250 ausgeführt. In nicht dargestellten weiteren Ausführungsformen ist der aufzustellende Gegenstand 250 ein Weihnachtsbaum, ein Tisch oder ein Stuhl, beispielsweise ein Bürostuhl.

In einer weiteren Ausführungsform des Standfußes 10 umfasst der zweite Teilkörper 252b ein Metall, einen Kunststoff, ein Holz, ein Hartgummi, ein Beton oder ein Glas. Durch die genannten Materialien können sich fallweise entsprechende Unterschiede in Bezug auf Reibungseigenschaften, Elastizität und/oder Dauerfestigkeit ergeben.

In einer Ausführungsform des Standfußes 10 ist der zweite Teilkörper 252b mit dem ersten Teilkörper 252a mittels Formschluss und/oder Kraftschluss und/oder Stoffschluss verbunden. Beispielsweise ist der zweite Teilkörper 252b an dem ersten Teilkörper 252a mittels Kleben verbunden.

In einer Ausführungsform des Standfußes 10 ist der zweite Teilkörper 252b mittels Bedampfen, insbesondere mittels Bedampfen durch ein Keramikmaterial, an dem ersten Teilkörper 252a erzeugt.

In einer Ausführungsform umfasst der erste Teilkörper 252a einen Gummi und/oder einen Schaumstoff und/oder einen Kunststoff und/oder eine auf Druck beanspruchbare Feder.

Beispielsweise weist der erste Teilkörper 252a ein Elastizitätsmodul von kleiner 10 kN/mm2, Kilonewton pro Quadratmillimeter, bevorzugt kleiner 5 kN/mm2, noch stärker bevorzugt kleiner 1 kN/mm2, auf. Ebenso kann eine Shore-A-Härte des ersten Teilkörpers 252a kleiner 50, bevorzugt kleiner 20, noch stärker bevorzugt kleiner 10 betragen.

Wie in Figur 17 zu erkennen, ist ein in der Zeichnung vertikales Maß und somit ein Volumen des ersten Teilkörpers 252a größer als ein entsprechendes Maß und Volumen des zweiten Teilkörpers 252b. In Abhängigkeit von einer jeweiligen Ausführungsform des Standfußes 10 weist vorzugsweise ein Verhältnis des Volumens des ersten Teilkörpers 252a zu dem Volumen des zweiten Teilkörpers 252b einen Wert größer gleich 1 auf, bevorzugt einen Wert größer gleich 20, noch stärker bevorzugt größer gleich 500 auf. Der zweite Teilkörper 252b kann also vergleichsweise dünn ausgeführt sein, was jedoch nicht zwingend erforderlich ist.

In einer Ausführungsform weist der zweite Teilkörper 252b ein Elastizitätsmodul von größer 0,3 kN/mm2, Kilonewton pro Quadratmillimeter, bevorzugt größer 10 kN/mm2, noch stärker bevorzugt größer 25 kN/mm2, auf. Beispielsweise kann eine spezifische "Keramik" typbedingt ein Elastizitätsmodul von in etwa 0,3 bis in etwa 30 kN/mm2 aufweisen. Ebenso kann eine Shore-D-Härte des zweiten Teilkörpers 252b größer 80, bevorzugt größer 100, noch stärker bevorzugt größer 150 betragen.

In einer nicht dargestellten Ausführungsform ist das primäre Auflagerelement 252 in dem Standfuß 10 mittels Verschrauben gehalten, insbesondere mittels Einschrauben des primären Auflagerelements 252 in den Standfuß 10. Beispielsweise umfasst das primäre Auflagerelement 252 dazu einen zentralen Gewindeabschnitt (nicht dargestellt). Alternativ kann das primäre Auflagerelement 252 in dem Standfuß 10 mittels Einrasten gehalten sein.

Weiterhin umfasst der Standfuß 10 ein sekundäres Gleitelement bzw. sekundäres Auflagerelement 254, wobei, insbesondere in einem unbelasteten Zustand, das primäre Auflagerelement 252 sich weiter aus einer Grundflächenebene des Standfußes 10 hinaus erstreckt als das sekundäre Auflagerelement 254. Dies wird in der folgenden Figur 18 noch gezeigt werden. In der Ausführungsform von Figur 17 ist das sekundäre Auflagerelement 254 ein unterer Gehäuseabschnitt bzw. ein Boden des Standfußes 10, wobei der Standfuß 10 also an seiner der Trägerfläche 212 zugewandten Unterseite im Wesentlichen plan ausgeführt ist.

In Abhängigkeit von einer Ausführungsform weist das sekundäre Auflagerelement 254 ein Elastizitätsmodul größer gleich 0,1 kN/mm2, Kilonewton pro Quadratmillimeter, bevorzugt größer gleich 5 kN/mm2, auf.

Bevorzugt ist der Standfuß 10 derart ausgeführt, dass eine (der Trägerfläche 212 zugewandte) Oberfläche des zweiten Teilkörpers 252b des primären Auflagerelements 252 in Bezug auf eine Referenzoberfläche (welche beispielsweise der Trägerfläche 212 entspricht) eine erste Reibungszahl aufweist, wobei eine Oberfläche des sekundären Auflagerelements 254 in Bezug auf dieselbe Referenzoberfläche eine zweite Reibungszahl aufweist, die größer ist als die erste Reibungszahl.

In einer Ausführungsform umfasst das primäre Auflagerelement 252 einen Verbundwerkstoff, wobei mindestens eine erste Komponente des Verbundwerkstoffs ein gummielastisches Material umfasst. Insbesondere wird dabei die federnde Eigenschaft von Gummi ausgenutzt.

In einer nicht dargestellten Ausführungsform des Standfußes 10 ist mindestens ein weiteres Auflagerelement vorgesehen, das mindestens eine Rolle, Walze, oder rollbare Kugel umfasst. Vorzugsweise ist dabei das primäre Auflagerelement 252 mittels einer auf Druck beanspruchbaren Feder, vorzugsweise einer Schraubenfeder oder Blattfeder, an einem Grundkörper des Standfußes 10 angeordnet.

Beispielsweise kann das besagte weitere Auflagerelement ergänzend zu dem primären und sekundären Auflagerelement 254 bzw. 254 vorgesehen sein. Oder es kann das primäre Auflagerelement 252 durch das weitere Auflagerelement ersetzt sein. Im letztgenannten Fall kann der Standfuß 10 beispielsweise Rollen aufweisen, welche mittels Federn (in Ermangelung des ein elastisches Material aufweisenden ersten Teilkörpers 252a) gegen die Trägerfläche 212 gedrückt werden, wobei sich im Wesentlichen eine ähnliche Funktion zur Ausführungsform von Figur 17 ergibt.

Bevorzugt ist eine Elastizitätskonstante oder eine Federkonstante für das primäre Auflagerelement 252 (bzw. für den ersten Teilkörper 252a) derart vorgegeben, dass dann, wenn der Standfuß 10 mit einer ersten Gewichtskraft belastet ist, das mindestens eine primäre Auflagerelement 252 ergänzend zu dem mindestens einen sekundären Auflagerelement 254 gegen die Trägerfläche 212 drücken kann (Figur 17), und dass dann, wenn der Standfuß 10 mit einer zweiten Gewichtskraft belastet ist, welche kleiner ist als die erste Gewichtskraft, das mindestens eine sekundäre Auflagerelement 254 von der Trägerfläche 212 abheben kann (Figur 18).

Die erste Gewichtskraft ergibt sich beispielsweise gemäß Figur 17 aus einem Eigengewicht des Standfußes 10 plus eines oder mehrerer optional in dem Standfuß 10 anordenbarer Ballastgewichte 60 (siehe beispielsweise die Figuren 8, 12 oder 13), plus eines Gewichts des Sonnenschirms 250.

Die zweite Gewichtskraft entspricht beispielsweise einem teilweise von dem Standfuß 10 demontierten Sonnenschirm 250 und/oder einem zumindest teilweise von dem Standfuß 10 demontierten Ballastgewicht 60. Dies ist in der Figur 18 dargestellt. Sofern das Halterohr 213 als Baueinheit mit dem Sonnenschirm 250 ausgeführt ist, werden beide Elemente 250 und 213 zusammen entfernt.

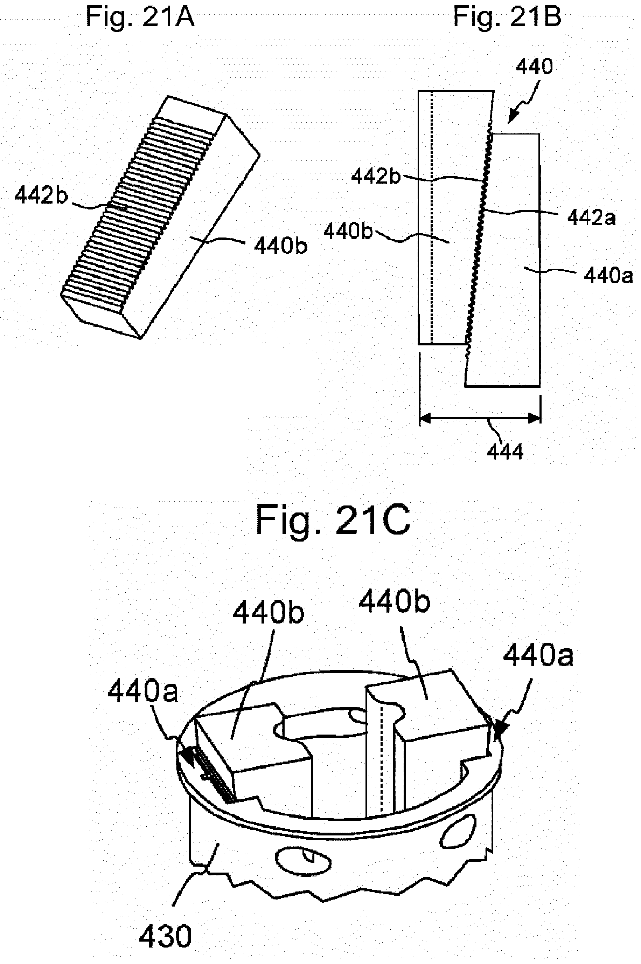

Entsprechend der derart geringeren Gewichtskraft kann das sekundäre Auflagerelement 254 von der Trägerfläche 212 also abheben. Dadurch liegt der Standfuß 10 nur mit den primären Auflagerelementen 252 auf der Trägerfläche 212 auf. Weil die zweiten Teilkörper 252b wie oben beschrieben eine vergleichsweise kleine Reibung an der Trägerfläche 212 aufweisen, kann der Standfuß 10 im Zustand von Figur 21 mit einer vergleichsweise geringen Kraft auf der Trägerfläche 212 verschoben und damit transportiert werden, ohne dass der Standfuß 10 dabei zusätzlich angehoben werden müsste.

In einer nicht dargestellten Ausführungsform ist der aufzustellende Gegenstand 250 ein Stuhl, beispielsweise ein Bürostuhl, welcher also an einem Standfuß 10 angeordnet ist.

In einer weiteren nicht dargestellten Ausführungsform ist der aufzustellende Gegenstand 250 ein Tisch, beispielsweise ein einbeiniger Tisch, welcher also an einem Standfuß 10 angeordnet ist.

Der besseren Verständlichkeit halber sind in mehreren der nachfolgend beschriebenen Figuren Maße (in Millimeter) angegeben. Es wird jedoch ausdrücklich darauf hingewiesen, dass sämtliche Maßangaben lediglich beispielhaft sind. Die Erfindung kann auch mit stark davon abweichenden Maßen und/oder mit stark davon abweichenden Proportionen und/oder mit stark davon abweichenden Einzelheiten ausgeführt werden.

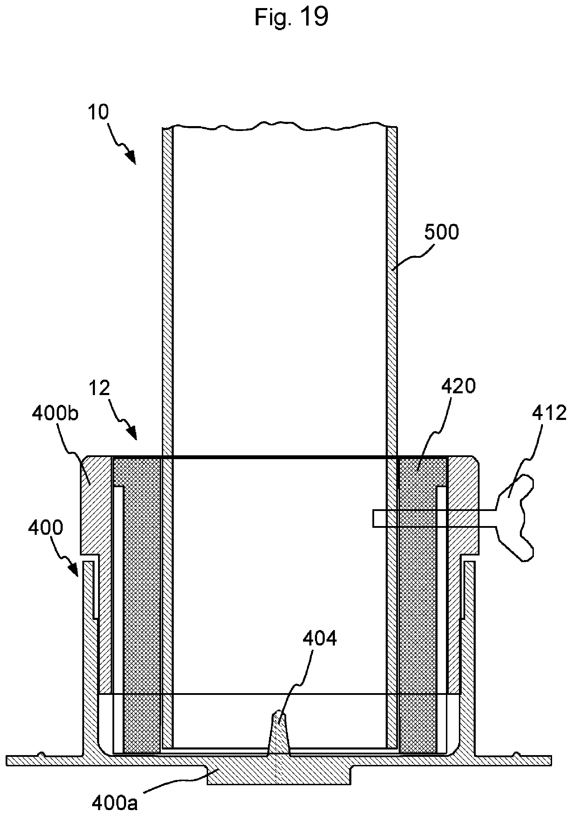

In einer Ausführungsform des Standfußes 10 kann vorgesehen sein, dass ein im Wesentlichen als Hohlzylinder ausgeführtes Tragrohr 500, welches konzentrisch zu einer Längsachse des Standfußes an dem Standfuß angeordnet ist, und das zum Tragen eines aufzustellenden Gegenstands 250 (z.B. Tischplatte 200) mittels mindestens einer zumindest in etwa als Hohlzylinder ausgeführten Adaptervorrichtung 400 bzw. 420 an dem Standfuß 10 gehalten ist. Dies ist skizzenhaft in der Figur 19 gezeigt.

Beispielsweise weist das Tragrohr 500 einen Durchmesser von 50 mm bis 200 mm auf, vorzugsweise etwa 80 mm bis 90 mm. Das Tragrohr 500 weist eine Mehrzahl von Öffnungen (nicht gezeigt) auf, welche sich jeweils in radialen Ebenen des Tragrohrs 500 erstrecken. Die Öffnungen sind teilweise zentrisch ausgerichtet und teilweise nicht zentrisch ausgerichtet. In der Mehrzahl sind die Öffnungen in einem axialen Rastermaß angeordnet.

Mittels der Öffnungen kann beispielsweise die Tischplatte 200 an dem Tragrohr 500 angeordnet und/oder verrastet werden, insbesondere höhenverstellbar angeordnet und/oder verrastet werden kann. Dazu weist die Tischplatte 200 eine zentrische Öffnung auf.

Vorzugsweise ist ein Innendurchmesser des Tragrohrs 500 größer als ein Außendurchmesser des in dem Standfuß 10 anordenbaren Halterohrs 213 für den Schirmständer (Sonnenschirm 250), wobei der Durchmesser des Tragrohrs 500 kleiner ist als ein Durchmesser des Hohlzylinders 222. Der erfindungsgemäße Standfuß 10 kann also beispielsweise den Tischfuß, das Halterohr 213, das Tragrohr 500, den Hohlzylinder 222 und/oder die Tischplatte 200 umfassen.

Die Ausführungsform gemäß Figur 19 zeigt die untere Schraubhülse 400a, in welche die obere Schraubhülse 400b eingeschraubt ist. Die untere Schraubhülse 400a bildet zusammen mit der oberen Schraubhülse 400b die erste Adaptervorrichtung 400. In einem radial inneren Abschnitt der oberen Schraubhülse 400b ist die zweite Adaptervorrichtung 420angeordnet.

In einem radial inneren Abschnitt der zweiten Adaptervorrichtung 420 ist das Tragrohr 500 angeordnet. Stellvertretend für eine Mehrzahl von möglichen formschlüssigen und/oder kraftschlüssigen Verbindungen ist in der Figur 19 ergänzend eine als Flügelschraube ausgeführte Schraubverbindung 412 skizziert.

Die Figur 19 zeigt also eine Ausführungsform des Standfußes 10, bei welcher das Tragrohr 500 formschlüssig an dem Standfuß 10 gehalten ist, und wobei das Tragrohr 500 und/oder die mindestens eine Adaptervorrichtung 400 und 420 mittels mindestens einer Schraubverbindung 412 an dem Standfuß 10 gehalten ist. Vorliegend umfasst die in der Figur 1 lediglich angedeutete Halteeinrichtung 12 die in der Figur 19 gezeigten Elemente.

Nachfolgend werden weitere Einzelheiten zur Anordnung der Tischplatte 200 bzw. von Teil-Tischplatten beschrieben. Um Tischplatten 200 bzw. Teil-Tischplatten am Tragrohr 500 befestigen zu können, wird eine möglichst einfach auf- und abzubauende Befestigung am Tragrohr 500 benötigt. Um das Problem zu lösen, werden Steckbolzen verwendet, die in entsprechend tief in die Stirnflächen der Teil-Tischplatten eingebohrte Löchern eingeschoben werden. Würde nur ein Steckbolzen, der direkt durch die Mitte des Tragrohres 500 führt, verwendet werden, könnte in das Tragrohr 500 in der Mitte kein Schirmrohr mehr eingestellt werden, da sonst der Tischhaltebolzen im Weg wäre. Werden jedoch zwei außermittige Bolzenlöcher verwendet, kann in der Mitte ein Schirmrohr in das Tragrohr 500 eingestellt werden. Der lichte Abstand der beiden Tragbolzen ist genau so groß, dass sämtliche Standardschirmrohre (15-55 mm) zwischen die beiden Tragrohrbolzen hindurchpassen. Um die Tische besonders flexibel nutzen zu können, sind die Bohrungen im Tragrohr 500 in einem Rastermaß (50 mm) angebracht. Dies ermöglicht eine individuelle Höhenbefestigung der Tischplatten 200 bzw. Teil-Tischplatten.

In das Basistragrohr kann ein Verlängerungstragrohr über eine Hülsensteckverbindung eingeführt werden. Dabei sind die Löcher im Verlängerungstragrohr so geschickt angeordnet, dass die Tischhaltebolzen durch die beiden ineinander gesteckten Rohre verläuft und so automatisch eine Zugsicherung erfolgt, wenn in diesem Bereich eine Tischplatte 200 bzw. Teil-Tischplatte befestigt wird.

Die Hülsenstecktechnik mit den Bolzen ist besonders vorteilhaft, da sie sehr viel schneller zu montieren ist, als zum Beispiel geschraubte Rohre. Auch sind bis auf die vertieft in die Tischplatten 200 bzw. Teil-Tischplatten eingelassenen Spannverschlüsse auf der Unterseite der Tischplatten 200 bzw. Teil-Tischplatten keine sonstigen Verbindungsmittel zu erkennen, was auch zu einem sehr filigranen Erscheinungsbild der Tischplatten am Tragrohr führt, wenn diese besonders hoch aufgehängt sein sollten, so dass ein Betrachter die Tischplattenunterseite sieht. Zudem ergibt sich eine sehr geringe Stapelhöhe für die Tischplatten 200 bzw. Teil-Tischplatten beim Transport. Sie entspricht genau der Tischplattendicke, da sämtliche Verbindungselemente vertieft in die Tischplatten 200 bzw. Teil-Tischplatten eingelassen sind.

Zum besseren Halt sind die beiden Tischplattenhälften bzw. Teil-Tischplatten jeweils mit Nut und Feder ausgestattet. Werden mit derselben Steckverbindung quadratische oder rechteckige Tischplatten 200 bzw. Teil-Tischplatten zwischen mindestens zwei Standfüße 10 mit je einem Tragrohr 500 befestigt, kann auch eine Tafel aufgestellt werden. Werden zusätzlich Eckstücke verwendet, so können L- oder T- oder U-förmige Tischflächen 200 bzw. Teil-Tischplatten aufgestellt werden, bei denen dann auch noch die Sonnenschirme 250 in die Tragrohre 500 eingeführt sein können.

Ist die Aufstellfläche schräg, kann die Tafel trotzdem aufgestellt werden, wenn zuvor die Nivellierelemente 136 in die Aufstellnoppen auf der Unterseite des Standfußes 10 eingeführt wurden. Durch die Rasterbohrungen in den Tragrohren 500 kann die Tafel in der individuell am geeignetsten Höhe aufgebaut werden, zum Beispiel als Ess- oder Stehtischfläche.

Ein radial innerer Bereich der zweiten Adaptervorrichtung 420 weist vorliegend einen Durchmesser von in etwa 85 Millimeter auf. Darin kann entweder ein vom Durchmesser passender Schirmstock bzw. ein Halterohr 213 (Fig. 18) eingestellt werden, oder das Tragrohr 500 (Fig. 19). Um das Tragrohr 500 fest mit dem Standfuß 10 zu verbinden, können Fixierschrauben (insbesondere eine oder mehrere Schraubverbindungen 412) durch die obere Schraubhülse 400b und zusätzlich durch die zweite Adaptervorrichtung 420 in das Tragrohr 500 eingeschraubt werden. Damit ist eine kraft- und formschlüssige Verbindung sämtlicher Bauteile gegeben. Der Standfuß 10 mit dem Tragrohr 500 charakterisiert dann eine monolithische Einheit. Ein großer Durchmesser des Tragrohrs 500 hat den Vorteil, dass für die Kraftübertragung ein großer innerer Hebelarm sehr vorteilhaft ist.

Vorzugsweise ist bei dieser Art der Fixierung in der oberen Schraubhülse 400b kein Gewinde vorhanden, da sonst eine Schraube Probleme bekommen kann, wenn sie in zwei voneinander entfernte Gewinde eingeschraubt wird. Deshalb befindet sich in der oberen Schraubhülse 400b eine Sechskantöffnung und ein Übergangskonus von der oberen Schraubhülse 400b auf die zweite Adaptervorrichtung 420. Für den Fall der Verschraubung des Tragrohres 500 mit dem Standfuß 10 ist die Sechskantöffnung leer und der Bolzen der Flügelschraube geht direkt durch die zweite Adaptervorrichtung 420. Wenn ein Sonnenschirm 250 (Fig. 17) bzw. das Halterohr 213 oder ein Weihnachtsbaum aufgestellt wird, so wird zuvor die radial innen angeordnete zweite Adaptervorrichtung 420 (Fig. 19) entfernt und in die Sechskantöffnung wird von innen eine M8-Mutter mit Flansch eingesteckt, durch welche die M8-Flügelschraube geführt wird. Der schräge Flansch der Einsteckmutter ermöglicht ein problemloses Entnehmen der Mutter, wenn die zweite Adaptervorrichtung 420 mit dem Tragrohr 500 wieder verwendet werden soll.

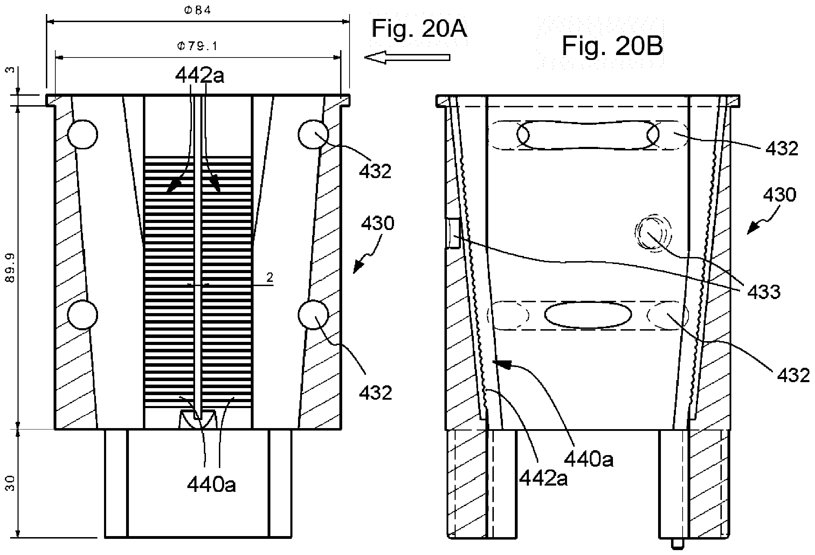

Die Figuren 20A bis 20G zeigen mehrere Ansichten einer dritten Adaptervorrichtung 430 für eine weitere Ausführungsform des Standfußes 10, wobei die dritte Adaptervorrichtung 430 mindestens eine radial wirkende Klemmvorrichtung 440 aufweist, und wobei ein radiales Maß der Klemmvorrichtung 440 im Wesentlichen stufenlos einstellbar ist.

Wie in Figur 20A zu erkennen, beträgt ein Außendurchmesser der dritten Adaptervorrichtung 430 unterhalb des oberen Randes vorliegend 79,1 Millimeter. Dieses Maß entspricht einem oberen Innendurchmesser des Tragrohrs 500. Somit kann die dritte Adaptervorrichtung 430 vorliegend radial innerhalb des Tragrohrs 500 angeordnet sein. Beispielsweise kann die dritte Adaptervorrichtung 430 in einem dem Tischfuß abgewandten Endabschnitt des Tragrohrs 500 angeordnet sein.

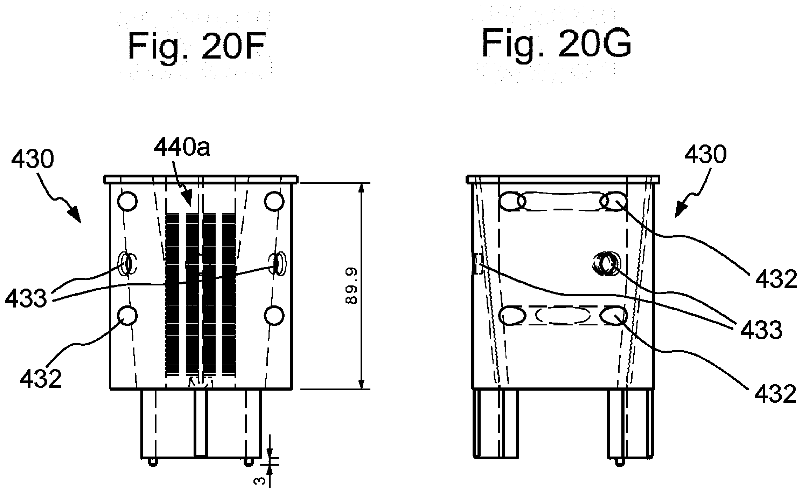

Öffnungen 432 an der dritten Adaptervorrichtung 430 sind so im axialen Abstand der Adaptervorrichtung 430 angeordnet, dass sie deckungsgleich mit den axial angeordneten Öffnungen des Tragrohrs 500 sind, für den Fall, dass die Adaptervorrichtung 430 vollständig von oben in das Tragrohr 500 kraft- und/oder formschlüssig eingeschoben ist. Damit kann die Adaptervorrichtung 430 sowohl in der Adaptervorrichtung 400 als auch im Tragrohr 500 eingesetzt werden. Die Fixierung der Adaptervorrichtung 430 erfolgt in der oberen Schraubhülse 400b durch Einschrauben der Schraubverbindung 412 bis in eine Einschraubmulde 433 (siehe die Figuren 20B, 20F und 20G) der Adaptervorrichtung 430.

Vorliegend umfasst die Klemmvorrichtung 440 mindestens ein erstes Klemmelement 440a, welches, insbesondere im Wesentlichen starr, mit dem Standfuß 10 koppelbar ist, wobei die Klemmvorrichtung 440 mindestens ein zweites Klemmelement 440b (siehe die Figuren 21A und 21B) umfasst, welches radial zwischen dem ersten Klemmelement 440a und dem aufzustellenden Gegenstand 250 anordenbar ist, und wobei das erste Klemmelement 440a eine erste Kontaktfläche 442a aufweist und das zweite Klemmelement 440b eine zweite Kontaktfläche 442b aufweist, wobei sich die erste und zweite Kontaktfläche 442a und 442b zumindest abschnittsweise berühren, wobei insbesondere eine Berührfläche eine Fläche von wenigstens etwa 20 Quadratmillimeter aufweist.

Die erste und/oder die zweite Kontaktfläche 442a bzw. 442b weist vorzugsweise eine Rasterung bzw. Riffelung oder dergleichen auf, welche beispielsweise wellenförmig, sinusförmig, halbkreisförmig, sägezahnförmig oder dreiecksförmig ausgeführt ist. Auch vergleichsweise "glatte" Kontaktflächen 442a bzw. 442b sind möglich, wobei eine jeweilige Reibung den gewünschten Effekt bewirkt. Alternativ oder ergänzend können die erste und/oder die zweite Kontaktfläche 442a bzw. 442b zumindest abschnittsweise auch eine andersartige insbesondere regellose und/oder regelmäßige Oberflächenstrukturierung aufweisen, die einen Kraftschluss und/oder Formschluss zwischen den Kontaktflächen 442a bzw. 442b ermöglicht.

In der Ausführungsform der Figuren 20A bis 20G ist die erste und/oder die zweite Kontaktfläche 442a bzw. 442b wenigstens abschnittsweise, vorzugsweise überwiegend eben ausgebildet. Beispielsweise ist die erste und/oder die zweite Kontaktfläche 442a bzw. 442b zu mehr als 90% einer Gesamtfläche eben ausgebildet.

Vorliegend ist die erste und/oder die zweite Kontaktfläche 442a bzw. 442b im Wesentlichen rechteckförmig ausgebildet, wobei eine Breite der ersten bzw. der zweiten Kontaktfläche 442a bzw. 442b kleiner als eine Länge der ersten bzw. der zweiten Kontaktfläche 442a bzw. 442b ist, und wobei eine Längsachse (ohne Bezugszeichen) der ersten bzw. der zweiten Kontaktfläche 442a bzw. 442b mit der Längsachse 224 des Standfußes 10 vorzugsweise einen Winkel zwischen etwa 2° und etwa 45°, insbesondere zwischen etwa 5° und etwa 30° bildet.

Vorzugsweise sind das erste und das zweite Klemmelement 440a und 440b jeweils zumindest abschnittsweise als so genannte schiefe Ebene ausgeführt, wobei diese Abschnitte komplementär zueinander ausgebildet sind. Vergleiche weiter unten die Figur 21B.

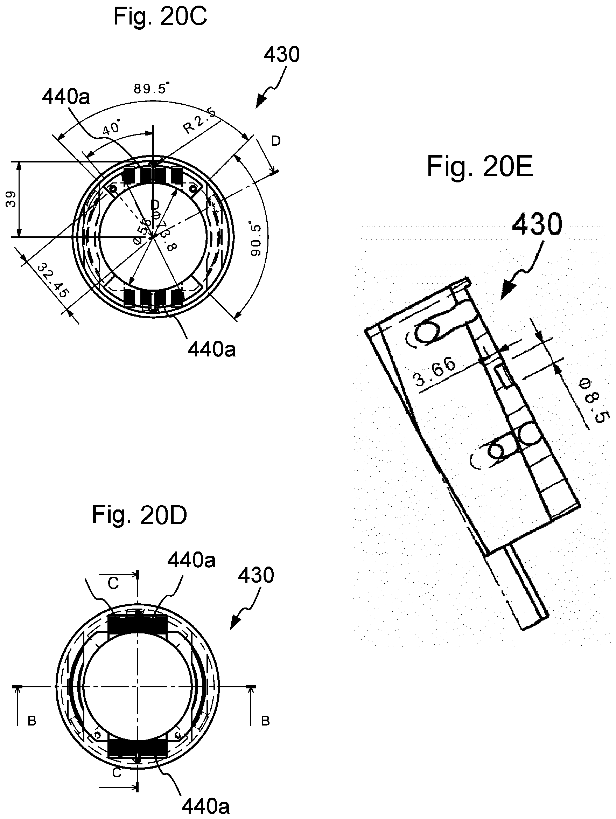

Die Figur 20A zeigt eine Schnittansicht der dritten Adaptervorrichtung 430 gemäß einer Linie B-B der Figur 20D. Insbesondere ist die erste Kontaktfläche 442a zu erkennen, welche vorliegend in einer in der Zeichnung vertikalen Richtung in einzelne Bereiche unterteilt ist, vergleiche auch die Figuren 20C, 20D und 20F. Die Figur 20B zeigt eine Schnittansicht der dritten Adaptervorrichtung 430 gemäß einer Linie C-C der Figur 20D.

Die Figuren 20C bzw. 20D zeigen eine erste bzw. eine zweite radiale Ansicht der dritten Adaptervorrichtung 430. Die Figur 20E zeigt eine Schnittansicht gemäß einer Linie D-D der Figur 20C. Die Figur 20F zeigt eine "Untersicht". Die Figur 20G zeigt eine Hilfsansicht. Die Figuren 20C bis 20G weisen in Bezug auf die Figuren 20A und 20B einen verkleinerten Maßstab auf.

Die Figur 21A zeigt das zweite Klemmelement 440b in einer perspektivischen Darstellung. Die Figur 21B zeigt eine Prinzipskizze für die Klemmvorrichtung 440, wobei ein radiales Maß 444 in Abhängigkeit von einer relativen Position der Klemmelemente 440a und 440b veränderlich ist.

Die Figur 21C zeigt eine Perspektivdarstellung der dritten Adaptervorrichtung 430 mit zwei in einem radial inneren Bereich der Adaptervorrichtung 430 angeordneten zweiten Klemmelementen 440b. Wie zu erkennen, weist wenigstens eine Oberfläche wenigstens eines Klemmelements, vorzugsweise eine Oberfläche der zweiten Klemmelemente 440b, insbesondere eine der ersten bzw. der zweiten Kontaktfläche 442a bzw. 442b gegenüberliegende Oberfläche, zumindest abschnittsweise eine Geometrie einer Klothoide auf. Dadurch kann das Halterohr 213 weit gehend unabhängig von einem Durchmesser des Halterohrs 213 fest zwischen den beiden zweiten Klemmelementen 440b gehalten werden.

## Patentansprüche

1. Standfuß (10, 10b) mit einer Halteeinrichtung (12) zum Halten eines aufzustellenden Gegenstands (250), mit einem Aufnahmebereich (20) zur Aufnahme eines abnehmbaren Ballastgewichts (60) in einer Aufnahmeposition (24), wobei die Aufnahmeposition (24) radial außenliegend angeordnet ist und von der Aufnahmeposition (24) aus radial innenliegend, in Umfangsrichtung wenigstens abschnittsweise ein erhabener Bereich (28) angeordnet ist, wobei der Standfuß (10, 10b) ein Ballastgewicht (60) zum Beschweren des Standfußes (10, 10b) aufweist, wobei das Ballastgewicht (60) eine Vielzahl flexibel miteinander verbundener oder verbindbarer Ballastelemente (64), vorzugsweise eine Vielzahl im Wesentlichen kugelförmiger, zylinderförmiger oder fassförmiger, flexibel miteinander verbundener Einzelgewichte bzw. Ballastelemente (64), umfasst, und wobei das Ballastgewicht (60) in der Aufnahmeposition (24) angeordnet ist, **dadurch gekennzeichnet, dass** wenigstens zwei der Ballastelemente (64) über ein Verbindungsmittel (68) miteinander verbunden sind, wobei die wenigstens zwei Ballastelemente (64) jeweils ein Durchgangsloch (76) aufweisen und ein längliches, insbesondere seilartiges, Verbindungsmittel (68) durch das jeweilige Durchgangsloch (76) der Ballastelemente (64) geführt ist.

2. Standfuß (10, 10b) nach Anspruch 1, **dadurch gekennzeichnet, dass** der erhabene Bereich (28) eine Transportfläche (32) umfasst, welche vorzugsweise an den Aufnahmebereich (20) angrenzt.

3. Standfuß (10, 10b) nach Anspruch 2, **dadurch gekennzeichnet, dass** die Transportfläche (32) gegenüber einer Standseite (40) insgesamt in einem Winkel (36) zwischen 5° und 30°, vorzugsweise zwischen 10° und 22°, insbesondere zwischen 12° und 18°, geneigt ist.

4. Standfuß (10, 10b) nach einem oder mehreren der vorangegangenen Ansprüche 2 oder 3, **dadurch gekennzeichnet, dass** die Transportfläche (32) im Wesentlichen die Form einer Mantelfläche eines Kegelstumpfs aufweist.

5. Standfuß (10, 10b) nach einem oder mehreren der vorangegangenen Ansprüche 2 bis 4, **dadurch gekennzeichnet, dass** er einen Zuführbereich (44) umfasst, in welchen das Ballastgewicht (60) einführbar ist, und welcher derart ausgebildet ist, dass sich das Ballastgewicht (60) nach dem Einführen schwerkraftgetrieben über die Transportfläche (32) in die Aufnahmeposition (24) bewegt, sich vorzugsweise rollend und/oder gleitend in die Aufnahmeposition (24) bewegt.

6. Standfuß (10, 10b) nach Anspruch 5, **dadurch gekennzeichnet, dass** zwischen der Halteeinrichtung (12) und dem Zuführbereich (44) eine Einführeinrichtung (90) angeordnet ist, welche eine Einführfläche (94) aufweist, die im Wesentlichen die Form einer Mantelfläche eines Kegelstumpfs aufweist und gegenüber der Standseite (40) insgesamt in einem Winkel zwischen 7° und 35°, vorzugsweise zwischen 12° und 25°, insbesondere zwischen 15° und 20°, geneigt ist.

7. Standfuß (10, 10b) nach einem oder mehreren der vorangegangenen Ansprüche, **dadurch gekennzeichnet, dass** der Standfuß (10) mindestens ein primäres Auflagerelement (252) umfasst, das einen elastisch verformbaren ersten Teilkörper (252a) aufweist und wenigstens einen ein Keramikmaterial umfassenden zweiten Teilkörper (252b), der an dem ersten Teilkörper (252a) angeordnet ist

8. Standfuß (10, 10b) nach Anspruch 7, wobei der Standfuß (10) mindestens ein sekundäres Auflagerelement (254) umfasst, wobei, insbesondere in einem unbelasteten Zustand, das primäre Auflagerelement (252) sich weiter aus einer Grundflächenebene des Standfußes (10) hinaus erstreckt als das sekundäre Auflagerelement (254).

9. Standfuß (10, 10b) nach wenigstens einem der vorhergehenden Ansprüche, wobei der Standfuß (10) eine zur Anordnung auf einer Trägerfläche (212) vorgesehene Standfläche (214) und eine der Standfläche (214) im wesentlichen gegenüberliegende Aufnahmefläche (216) aufweist, wobei im Bereich der Aufnahmefläche (216) eine wenigstens eine Nut (218) aufweisende Aufnahmevorrichtung (220) zur Aufnahme eines Hohlzylinders (222) angeordnet ist, wobei der Standfuß (10, 10b) einen Hohlzylinder (222) umfasst, welcher in der Aufnahmevorrichtung (220) aufgenommen ist, und wobei der Standfuß (10) eine Tischplatte (200) umfasst, welche an einem von dem Standfuß (10) abgewandten Endabschnitt des Hohlzylinders (222) angeordnet ist.

10. Standfuß (10, 10b) nach wenigstens einem der vorhergehenden Ansprüche, wobei die Halteeinrichtung (12) mindestens eine Adaptervorrichtung (430) zum Halten des aufzustellenden Gegenstands (250) umfasst, und wobei die Adaptervorrichtung (430) mindestens eine radial wirkende Klemmvorrichtung (440) aufweist, und wobei ein radiales Maß der Klemmvorrichtung (440) im Wesentlichen stufenlos einstellbar ist, wobei die Klemmvorrichtung (440) mindestens ein erstes Klemmelement (440a) umfasst, welches, insbesondere im Wesentlichen starr, mit dem Standfuß (10) koppelbar ist, und wobei die Klemmvorrichtung (440) mindestens ein zweites Klemmelement (440b) umfasst, welches radial zwischen dem ersten Klemmelement (440a) und dem aufzustellenden Gegenstand (250) anordenbar ist, wobei das erste Klemmelement (440a) eine erste Kontaktfläche (442a) aufweist und das zweite Klemmelement (440b) eine zweite Kontaktfläche (442b) aufweist, wobei sich die erste und zweite Kontaktfläche (442a, 442b) zumindest abschnittsweise berühren, wobei insbesondere eine Berührfläche eine Fläche von wenigstens etwa 20 Quadratmillimeter aufweist.

11. Standfuß (10, 10b) nach Anspruch 10, wobei wenigstens eine Oberfläche wenigstens eines Klemmelements (440a; 440b), vorzugsweise eine Oberfläche des zweiten Klemmelements (440b), insbesondere eine der ersten bzw. der zweiten Kontaktfläche (442a; 442b) gegenüberliegende Oberfläche, zumindest abschnittsweise eine Geometrie einer Klothoide aufweist.

12. Standfuß (10, 10b) nach wenigstens einem der vorstehenden Ansprüche, wobei das Ballastgewicht (60) einen metallischen Werkstoff umfasst, vorzugsweise aus mindestens einem metallischen Werkstoff besteht.

13. Standfuß (10, 10b) nach wenigstens einem der vorstehenden Ansprüche, wobei das Ballastgewicht (60) in der Aufnahmeposition (24) derart angeordnet ist, dass sich beim Blick auf eine Standseite (40) wenigstens 80%, vorzugsweise 90%, insbesondere 100%, der Masse des Ballastgewichts (60) außerhalb eines inneren Kreises (104, 106, 108) befinden, und dass ein Kreismittelpunkt des inneren Kreises (104, 106, 108) ein geometrischer Mittelpunkt (100) der Halteeinrichtung (12) ist, und dass ein Durchmesser des inneren Kreises (104, 106, 108) mindestens 50%, vorzugsweise 60%, insbesondere 65%, eines Durchmessers eines äußeren Kreises (102) beträgt, und dass der äußere Kreis der kleinstmögliche Kreis (102) ist, welcher beim Blick auf die Standseite (40) den Standfuß (10) komplett umgibt.

14. Standfuß (10, 10b) wenigstens einem der vorstehenden Ansprüche, wobei in der Halteeinrichtung (12, 12b) ein Halteeinsatz (118, 118b) angeordnet ist, wobei der Halteeinsatz (118, 118b) als hohlzylinderförmiges Adapterelement (120, 120b) ausgeführt ist.

15. Standfuß (10, 10b) nach Anspruch 14, wobei der Halteeinsatz (118, 118b) eine Auflagefläche (128, 128b) aufweist.

## Claims

1. Stand (10, 10b) with a supporting device (12) for supporting an object (250) to be erected, with a seating section (20) for receiving a detachable ballast weight (60) in a seating position (24), wherein the seating position (24) is arranged radially on the outside, and radially on the inside of the seating position (24) there is arranged an elevated area (28) at least in sections in the circumferential direction, wherein the stand (10, 10b) comprises a ballast weight (60) for weighting the stand (10, 10b), wherein the ballast weight (60) comprises a plurality of ballast elements (64) which are or can be connected to each other flexibly, preferably a plurality of substantially spherical, cylindrical or barrel-shaped single weights or ballast elements (64) which can be connected to each other flexibly, and wherein the ballast weight (60) is arranged in the seating position (24), **characterized in that** at least two of the ballast elements (64) are connected to each other by means of a connecting means (68), wherein the at least two ballast elements (64) each have a through hole (76) and a longitudinal, in particular rope-type connecting means (68) is led through each of the through holes (76) of the ballast elements (64).

2. Stand (10, 10b) as claimed in claim 1, **characterized in that** the elevated area (28) comprises a transport surface (32) which is preferably adjacent to the seating area (20) .

3. Stand (10, 10b) as claimed in claim 2, **characterized in that** the transport surface (32) is inclined relative to a standing face (40) in an angle (36) of totally between 5° and 30°, preferably between 10° and 22°, in particular between 12° and 18°.

4. Stand (10, 10b) as claimed in one or more of the preceding claims 2 or 3, **characterized in that** the transport surface (32) substantially has the form of a lateral surface of a truncated cone.

5. Stand (10, 10b) as claimed in one or more of the preceding claims 2 to 4, **characterized in that** it comprises an insertion area (44) into which the ballast weight (60) can be inserted and which is configured in such a way that the ballast weight (60) moves after insertion, driven by gravity, across the transport surface (32) into the seating position (24), preferably moving rolling and/or sliding into the seating position (24) .

6. Stand (10, 10b) as claimed in claim 5, **characterized in that** between the supporting device (12) and the insertion area (44) an inserting device (90) is arranged which comprises an insertion surface (94) which substantially has the form of a lateral surface of a truncated cone and is inclined relative to the standing face (40) in an angle of totally between 7° and 35°, preferably between 12° and 25°, in particular between 15° and 20°.

7. Stand (10, 10b) as claimed in one or more of the preceding claims, **characterized in that** the stand (10) comprises at least one primary supporting element (252) which comprises an elastically deformable first partial body (252a) and at least one second partial body (252b) which comprises a ceramic material and which is arranged on the first partial body (252a).

8. Stand (10, 10b) as claimed in claim 7, wherein the stand (10) comprises at least one secondary supporting element (254), wherein, in particular in a state without load, the primary supporting element (252) extends further from a base plane of the stand (10) than the secondary supporting element (254).

9. Stand (10, 10b) as claimed in at least one of the preceding claims, wherein the stand (10) comprises a standing surface (214) provided for arrangement on a base surface (212) and a seating surface (260) substantially opposite to the standing surface (214), wherein in the area of the seating surface (216) at least one seating device (220) comprising at least one groove (218) and being provided for receiving a hollow cylinder (222) is arranged, wherein the stand (10, 10b) comprises a hollow cylinder (222) which is received in the seating device (220), and wherein the stand (10) comprises a tabletop (200) which is arranged at an end of the hollow cylinder (222) facing away from the stand (10).

10. Stand (10, 10b) as claimed in at least one of the preceding claims, wherein the supporting device (12) comprises at least one adapter device (430) for supporting the object (250) to be erected and wherein the adapter device (430) comprises at least one radially acting clamping device (440), and wherein a radial dimension of the clamping device (440) is substantially continuously adjustable, wherein the clamping device (440) comprises at least one first clamping element (440a) which can be coupled with the stand (10) in particular substantially rigidly, and wherein the clamping device (440) comprises at least one second clamping element (440b) which can be arranged radially between the first clamping element (440a) and the object (250) to be erected, wherein the first clamping element (440a) comprises a first contact surface (442a) and the second clamping element (440b) comprises a second contact surface (442b), wherein the first and the second contact surface (442a, 442b) are contacting each other at least partially, wherein in particular a contact surface has a surface area of at least 20 square millimeters.

11. Stand (10, 10b) as claimed in claim 10, wherein at least one surface of at least one clamping element (440a; 440b) preferably a surface of the second clamping element (440b), in particular a surface opposite to the first or the second contact surface (442a; 442b), respectively, at least partially comprises a geometry of a clothoid.

12. Stand (10, 10b) as claimed in at least one of the preceding claims, wherein the ballast weight (60) comprises a metallic material and preferably consists of at least one metallic material.

13. Stand (10, 10b) as claimed in at least one of the preceding claims, wherein the ballast weight (60) is arranged in the seating position (24) in such a way that, when viewing a standing face (40), at least 80%, preferably 90%, in particular 100% of the mass of the ballast weight (60) are outside of an inner circle (104, 106, 108), and that a center of the inner circle (104, 106, 108) is a geometrical center (100) of the supporting device (12), and that a diameter of the inner circle (104, 106, 108) is at least 50%, preferably 60%, in particular 65% of a diameter of an outer circle (102), and that the outer circle (102) is the smallest possible circle which completely encompasses the stand (10) when viewing the standing face (40).

14. Stand (10, 10b) as claimed in at least one of the preceding claims, wherein a supporting insert (118, 118b) is arranged in the supporting device (12, 12b), wherein the supporting insert (118, 118b) is configured as a hollow cylindrical adapter element (120, 120b).

15. Stand (10, 10b) as claimed in claim 14, wherein the supporting insert (118, 118b) comprises a support surface (128, 128b).

## Revendications

1. Pied support (10, 10b) comprenant un dispositif de retenue (12) destiné à retenir un objet (250) à installer, une zone de réception (20) destinée à recevoir un poids de lestage (60) amovible dans une position de réception (24), la position de réception (24) étant disposée radialement à l'extérieur et une zone en saillie (28) étant disposée à partir de la position de réception (24) radialement à l'intérieur, au moins par sections, dans la direction périphérique, dans lequel le pied support (10, 10b) présente un poids de lestage (60) destiné à lester le pied support (10, 10b), dans lequel ledit poids de lestage (60) comprend une pluralité d'éléments de lestage (64) qui sont reliés ou aptes à être reliés entre eux de manière flexible, de préférence une pluralité de poids individuels ou bien d'éléments de lestage (64) pour l'essentiel sphériques, cylindriques ou en forme de fût et reliés entre eux de manière flexible, et dans lequel le poids de lestage (60) est disposé dans la position de réception (24), **caractérisé par le fait qu'**au moins deux des éléments de lestage (64) sont reliés l'un à l'autre par un moyen de liaison (68), dans lequel lesdits au moins deux éléments de lestage (64) présentent chacun un trou traversant (76) et un moyen de liaison (68) longitudinal, en particulier de type câble, passe à travers le trou traversant (76) respectif des éléments de lestage (64).

2. Pied support (10, 10b) selon la revendication 1, **caractérisé par le fait que** la zone en saillie (28) comprend une surface de transport (32) qui, de préférence, est contiguë à la zone de réception (20).

3. Pied support (10, 10b) selon la revendication 2, **caractérisé par le fait que** la surface de transport (32) est inclinée par rapport à une face de pose (40) dans l'ensemble selon un angle (36) compris entre 5° et 30°, de préférence entre 10° et 22°, en particulier entre 12° et 18°.

4. Pied support (10, 10b) selon l'une ou plusieurs des revendications 2 ou 3 précédentes, **caractérisé par le fait que** la surface de transport (32) présente pour l'essentiel la forme d'une surface latérale d'un tronc de cône.

5. Pied support (10, 10b) selon l'une ou plusieurs des revendications 2 à 4 précédentes, **caractérisé par le fait qu'**il comprend une zone d'alimentation (44) dans laquelle le poids de lestage (60) peut être introduit, et laquelle est conçue de telle sorte que le poids de lestage (60), après avoir été introduit par gravité, se déplace sur la surface de transport (32) dans la position de réception (24), se déplace de préférence de manière roulante et/ou glissante dans la position de réception (24).

6. Pied support (10, 10b) selon la revendication 5, **caractérisé par le fait qu'**entre le dispositif de retenue (12) et la zone d'alimentation (44) est disposé un dispositif d'introduction (90) qui présente une surface d'introduction (94) laquelle présente pour l'essentiel la forme d'une surface latérale d'un tronc de cône et est inclinée par rapport à la face de pose (40) dans l'ensemble selon un angle compris entre 7° et 35°, de préférence entre 12° et 25°, en particulier entre 15° et 20°.

7. Pied support (10, 10b) selon l'une ou plusieurs des revendications précédentes, **caractérisé par le fait que** le pied support (10) comprend au moins un élément primaire d'appui (252) qui présente un premier corps partiel (252a) élastiquement déformable et au moins un deuxième corps partiel (252b) qui comprend un matériau céramique et qui est disposé sur ledit premier corps partiel (252a).

8. Pied support (10, 10b) selon la revendication 7, dans lequel le pied support (10) comprend au moins un élément secondaire d'appui (254), dans lequel, en particulier dans un état non chargé, ledit élément primaire d'appui (252) est plus en saillie d'un plan de surface de base du pied support (10) que l'élément secondaire d'appui (254).

9. Pied support (10, 10b) selon l'une au moins des revendications précédentes, dans lequel le pied support (10) comprend une surface de pose (214) prévue pour être disposée sur une surface de support (212) ainsi qu'une surface de réception (216) pour l'essentiel en regard de la surface de pose (214), dans lequel un dispositif de réception (220) présentant au moins une rainure (218) et destiné à recevoir un cylindre creux (222) est disposé au niveau de la surface de réception (216), dans lequel le pied support (10, 10b) comprend un cylindre creux (222) qui est reçu dans le dispositif de réception (220), et dans lequel le pied support (10) comprend un plateau de table (200) qui est disposé sur une section d'extrémité du cylindre creux (222), laquelle montre dans la direction opposée au pied support (10).

10. Pied support (10, 10b) selon l'une au moins des revendications précédentes, dans lequel le dispositif de retenue (12) comprend au moins un dispositif adaptateur (430) pour retenir l'objet (250) à installer, et dans lequel le dispositif adaptateur (430) comprend au moins un dispositif de serrage (440) agissant radialement, et dans lequel une dimension radiale du dispositif de serrage (440) peut être réglée pour l'essentiel en continu, dans lequel le dispositif de serrage (440) comprend au moins un premier élément de serrage (440a) qui peut être couplé, en particulier pour l'essentiel rigidement, au pied support (10), et dans lequel le dispositif de serrage (440) comprend au moins un deuxième élément de serrage (440b) qui peut être disposé radialement entre le premier élément de serrage (440a) et l'objet (250) à installer, dans lequel le premier élément de serrage (440a) présente une première surface de contact (442a) et le deuxième élément de serrage (440b) présente une deuxième surface de contact (442b), les première et deuxième surfaces de contact (442a, 442b) se touchant au moins par sections, dans lequel en particulier une surface de contact présente une surface d'au moins 20 millimètres carrés à peu près.

11. Pied support (10, 10b) selon la revendication 10, dans lequel au moins une surface d'au moins un élément de serrage (440a; 440b), de préférence une surface du deuxième élément de serrage (440b), en particulier une surface qui se trouve en regard de la première ou bien de la deuxième surface de contact (442a; 442b) présente, au moins en sections, une géométrie d'une clothoïde.

12. Pied support (10, 10b) selon l'une au moins des revendications précédentes, dans lequel ledit poids de lestage (60) comprend un matériau métallique, de préférence est réalisé dans au moins un matériau métallique.

13. Pied support (10, 10b) selon l'une au moins des revendications précédentes, dans lequel le poids de lestage (60) est agencé dans la position de réception (24) de telle sorte que, en regardant une face de pose (40), au moins 80 %, de préférence 90 %, en particulier 100 %, de la masse du poids de lestage (60) sont situés à l'extérieur d'un cercle intérieur (104, 106, 108), et qu'un centre de cercle du cercle intérieur (104, 106, 108) est un centre géométrique (100) du dispositif de retenue (12), et qu'un diamètre du cercle intérieur (104, 106, 108) fait au moins 50 %, de préférence 60 %, en particulier 65 %, d'un diamètre d'un cercle extérieur (102), et que le cercle extérieur est le cercle (102) le plus petit possible qui, en regardant la face de pose (40), entoure complètement le pied support (10).

14. Pied support (10, 10b) selon l'une au moins des revendications précédentes, dans lequel un insert de retenue (118, 118b) est disposé à l'intérieur du dispositif de retenue (12, 12b), dans lequel ledit insert de retenue (118, 118b) est conçu en tant qu'élément adaptateur (120, 120b) en forme de cylindre creux.

15. Pied support (10, 10b) selon la revendication 14, dans lequel l'insert de retenue (118, 118b) présente une surface d'appui (128, 128b).
